# EUROPEAN PATENT APPLICATION

(11) **EP 3 113 085 A1**
(43) Date of publication of application: **04.01.2017**
(21) Application number: 14827404.6
(22) Date of filing: 25.04.2014
(51) Int. Cl.: G06Q 10/00

(54) **CONTROL METHOD, INFORMATION PROVISION METHOD AND PROGRAM**

(30) Priority: 27.02.2014 US 201461945384 P
(71) Applicant: Panasonic Intellectual Property Corporation of America, Torrance, CA 90503 (US)
(72) Inventor: SASAKI, Takamitsu, Osaka 540-6207 (JP)
(74) Representative: Schwabe - Sandmair - Marx
(86) International application number: PCT/JP2014/002353
(87) International publication number: WO 2015/128907

(57) **Abstract**

A used amount confirmation screen (1500) is displayed that includes a calendar data display field (1503) in which a box (1504) of a day on which a used energy amount is equal to or higher than a prescribed reference value is displayed in a first color, and a box (1504) of a day on which a used energy amount is lower than the prescribed reference value is displayed in a second color.

## Description

### Technical Field

The present disclosure is related to information provision method used in, for example, an information management system that collects and manages log information of an electric appliance via a network.

### Background Art

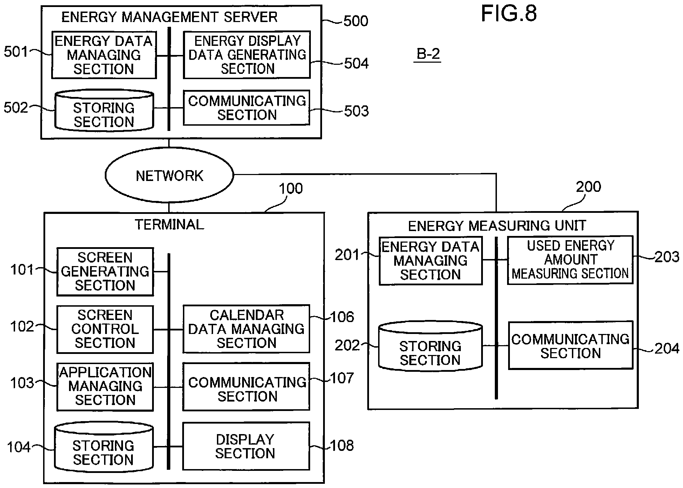

Patent Literature 1 discloses a distribution panel including a power measuring instrument that measures power. The power measuring instrument includes a power detection sensor. The power measuring instrument measures instantaneous power based on a voltage value or a current value from the power detection sensor, and integrates the instantaneous power to calculate an integrated power value. The power measuring instrument is connected to a power monitor calculating section via a network such as the Internet. The power monitor calculating section creates a display screen based on the integrated power value from the power measuring instrument and distributes the display screen to an external terminal. The display screen includes display regions that display, as numerical values and as graphs, a "used power amount" and a "generated power amount" when converted into values of the "used power amount" and the "generated power amount" in a case where instantaneous power from the power measuring instrument is continued for one hour. In addition, the graph displays on the display screen are displayed per day, per month, or the like. Furthermore, a target value can also be displayed on a graph (for example, paragraphs [0052] to [0056] and Figs. 8 to 12).

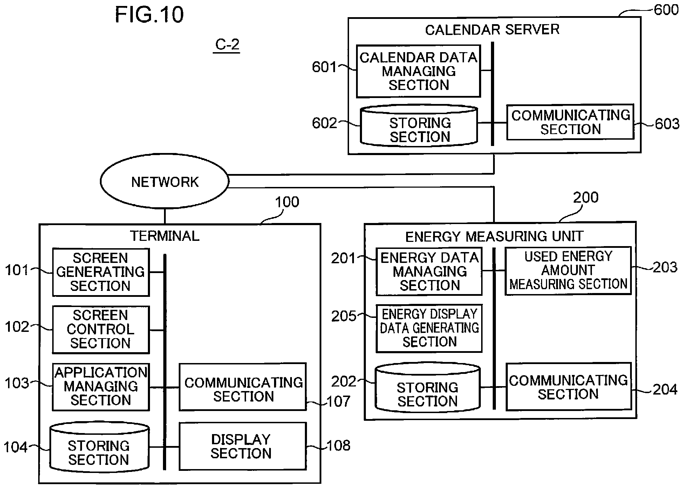

Patent Literature 2 discloses a technique for shifting dates of a compared month so as to match weekdays of dates of a monitored month and for displaying consumed power amount measured values of corresponding dates on a per day basis (for example, paragraph [0009], paragraphs [0040] to [0068], and Fig. 10).

However, the conventional art described above require further improvements.

### Citation List

### Patent Literature

Patent Literature 1 : Japanese Unexamined Patent Publication No. 2002-296307
Patent Literature 2 : Domestic Re-publication of PCT International Publication No. 2011/155258

### Summary of Invention

In order to address the foregoing issue, an aspect of the present disclosure provides a method for controlling a communication device which includes a display and which is connected via a network to an information management system that collects and manages log information including a consumed power amount of an electric appliance, the communication device including a memory that manages schedule information of a user of the communication device, the method causing a computer of the communication device to: receive an instruction to display on the display calendar data representing each day on a per month or per week basis; receive information indicating a consumed power amount associated with the user from the information management system via the network; generate calendar data combining a first display indicating that the consumed power amount associated with the user exceeds a prescribed reference value and a second display indicating that the consumed power amount associated with the user is equal to or lower than the prescribed reference value, in each region corresponding to each day before a present day of a concerned month or a concerned week based on the managed schedule information and the received information indicating the consumed power amount; and display the calendar data on the display.

According to the present aspect, a further improvement is achieved.

### Brief Description of Drawings

[Fig. 1] Fig. 1 is a diagram showing a first example of an overall configuration of a management system according to the present disclosure.
[Fig. 2] Fig. 2 is a diagram showing a second example of an overall configuration of a management system according to the present disclosure.
[Fig. 3] Fig. 3 is a diagram showing a third example of an overall configuration of a management system according to the present disclosure.
[Fig. 4] Fig. 4 is a diagram showing a fourth example of an overall configuration of a management system according to the present disclosure.
[Fig. 5] Fig. 5 is a block diagram showing a configuration pattern of the management system according to the first example.
[Fig. 6] Fig. 6 is a block diagram showing a configuration pattern of the management system according to the first example.
[Fig. 7] Fig. 7 is a block diagram showing a configuration pattern of the management system according to the second example.
[Fig. 8] Fig. 8 is a block diagram showing a configuration pattern of the management system according to the second example.
[Fig. 9] Fig. 9 is a block diagram showing a configuration pattern of the management system according to the third example.
[Fig. 10] Fig. 10 is a block diagram showing a configuration pattern of the management system according to the third example.
[Fig. 11] Fig. 11 is a block diagram showing a configuration pattern of the management system according to the fourth example.
[Fig. 12] Fig. 12 is a block diagram showing a configuration pattern of the management system according to the fourth example.
[Fig. 13] Fig. 13 is a block diagram showing a configuration pattern of the management system according to the fourth example.
[Fig. 14] Fig. 14 is a diagram showing an example of a basic screen.
[Fig. 15] Fig. 15 is a diagram showing a first example of a used amount confirmation screen.
[Fig. 16] Fig. 16 is a diagram showing a second example of a used amount confirmation screen.
[Fig. 17] Fig. 17 is a diagram showing a different display example of the used amount confirmation screen according to the first example.
[Fig. 18] Fig. 18 is a diagram showing the used amount confirmation screen according to the first example when the number of guideline days is smaller than the remaining number of days in the present month.
[Fig. 19] Fig. 19 is a diagram showing a third example of a used amount confirmation screen.
[Fig. 20] Fig. 20 is a diagram showing a fourth example of a used amount confirmation screen.
[Fig. 21] Fig. 21 is a diagram showing a fifth example of a used amount confirmation screen.
[Fig. 22] Fig. 22 is a diagram showing a sixth example of a used amount confirmation screen.
[Fig. 23] Fig. 23 is a diagram showing an example of a data configuration of a reference value table.
[Fig. 24] Fig. 24 is a diagram showing an example of a data configuration of energy management data.
[Fig. 25] Fig. 25 is a diagram showing an example of a data configuration of energy display data.
[Fig. 26] Fig. 26 is a diagram showing an example of a data configuration of a calendar plan list.
[Fig. 27] Fig. 27 is a sequence diagram showing a collection process of energy data.
[Fig. 28] Fig. 28 is a sequence diagram showing a process sequence of a management system.
[Fig. 29] Fig. 29 is a sequence diagram showing a process sequence of a management system.
[Fig. 30] Fig. 30 is a sequence diagram showing a process sequence of a management system.
[Fig. 31] Fig. 31 is a sequence diagram showing a process sequence of a management system.
[Fig. 32] Fig. 32 is a sequence diagram showing a process sequence of a management system.
[Fig. 33] Fig. 33 is a sequence diagram showing a process sequence of a management system.
[Fig. 34] Fig. 34 is a sequence diagram showing a process sequence of a management system.
[Fig. 35] Fig. 35 is a sequence diagram showing a process sequence of a management system.
[Fig. 36] Fig. 36 is a sequence diagram showing a process sequence of a management system.
[Fig. 37] Fig. 37 is a flow chart of a first example of a display process of a used amount confirmation screen.
[Fig. 38] Fig. 38 is a flow chart of a second example of a display process of a used amount confirmation screen.
[Fig. 39] Fig. 39 is a flow chart of a third example of a display process of a used amount confirmation screen.
[Fig. 40] Fig. 40 is a flow chart of a fourth example of a display process of a used amount confirmation screen.
[Fig. 41] Fig. 41 is a flow chart of a fifth example of a display process of a used amount confirmation screen.
[Fig. 42] Fig. 42 is a flow chart of a generation process (S3704, S3812) of energy display data.
[Fig. 43] Fig. 43 is a flow chart of a first example of a display process (S3706) of a used energy amount by a terminal.
[Fig. 44] Fig. 44 is a flow chart of a second example of the display process (S3706) of a used energy amount by a terminal.
[Fig. 45] Fig. 45 is a flow chart of a third example of the display process (S3706) of a used energy amount by a terminal.
[Fig. 46] Fig. 46 is a flow chart of a fourth example of the display process (S3706) of a used energy amount by a terminal.
[Fig. 47] Fig. 47 is a flow chart of a fifth example of the display process (S3706) of a used energy amount by a terminal.
[Fig. 48] Fig. 48 is a flow chart of a sixth example of the display process (S3706) of a used energy amount by a terminal.
[Fig. 49] Fig. 49 is a flow chart showing an advice drawing process (S4307). Description of Embodiments

### (Circumstances leading to the invention of an aspect of the present disclosure)

Patent Literature 1 described above simply provides, together with a target value, graph displays of a "used power amount" and a "generated power amount" on a per hour, per day, or per month basis when converted into values of the "used power amount" and the "generated power amount" in a case where instantaneous power from the power measuring instrument is continued for one hour.

However, simply providing graph displays of a "used power amount" and a "generated power amount" per a prescribed time unit does not enable a determination to be made as to why the "used power amount" exceeded the target value or stayed equal to or below the target value on a concerned day. For example, a determination cannot be made that the consumed power amount of the concerned day exceeded the target value because a user spent the whole day at home. In a similar manner, for example, a determination cannot be made that the consumed power amount of the concerned day was equal to or lower than the target value because the user went on a trip and was not at home that day.

Therefore, since Patent Literature 1 simply shows that the "used power amount" had exceeded the target value or was equal to or lower than the target value on a concerned day and does not present any information for determining the reason that the "used power amount" had exceeded the target value or was equal to or lower than the target value on the concerned day, an energy conservation promoting effect is diminished.

Patent Literature 2 simply displays a consumed power amount of a present month in comparison to a consumed power amount of a previous month or a previous year.

Therefore, even in Patent Literature 2, a determination cannot be made as to why the used power amount on a concerned day was higher or lower than the previous month or the previous year. For example, a determination cannot be made that the consumed power amount on a concerned day of the present month was relatively high because a user spent the whole day at home. In a similar manner, for example, a determination cannot be made that the consumed power amount of the concerned day of the present month was relatively low because the user went on a trip and was not at home that day.

Therefore, since Patent Literature 2 is also limited to simply showing that the consumed power amount of a concerned day was relatively high or relatively low and does not present any information for determining the reason that the used power amount was relatively high or relatively low on the concerned day, an energy conservation promoting effect is diminished.

Based on the considerations described above, the present inventors arrived at an invention represented by the respective aspects according to the present disclosure.
(1) A first aspect of the present disclosure provides
   a method for controlling a communication device which includes a display and which is connected via a network to an information management system that collects and manages log information including a consumed power amount of an electric appliance,
   the communication device including a memory that manages schedule information of a user of the communication device,
   the method causing a computer of the communication device to:
   receive an instruction to display on the display calendar data representing each day on a per month or per week basis;
   receive information indicating a consumed power amount associated with the user from the information management system via the network;
   generate calendar data combining a first display indicating that the consumed power amount associated with the user exceeds a prescribed reference value and a second display indicating that the consumed power amount associated with the user is equal to or lower than the prescribed reference value in each region corresponding to each day before a present day of a concerned month or a concerned week based on the managed schedule information and the received information indicating the consumed power amount; and
   display the calendar data on the display.

The present aspect provides calendar data to be displayed on a display of a communication device of the user. The calendar data is displayed by combining a first display indicating that a consumed power amount associated with the user exceeds a prescribed reference value and a second display indicating that the consumed power amount associated with the user is equal to or lower than the prescribed reference value in a region corresponding to each day before the present day of a concerned month or a concerned week. In other words, the calendar data doubles as a screen for displaying plans of the user and a screen representing a consumed power amount.

Accordingly, for example, when the consumed power amount of a given day exceeds the prescribed reference value, plans for the given day can be confirmed using the calendar data. Therefore, the user can determine why the consumed power amount of the given day had exceeded the prescribed reference value in consideration of plans for the given day. For example, a determination can be made instantaneously that the consumed power amount of the given day had exceeded the prescribed reference value because the user spent the whole day at home.

In a similar manner, for example, when the consumed power amount of another day is equal to or lower than the prescribed reference value, plans for the other day can be confirmed using the calendar data. Therefore, the user can determine why the consumed power amount of the other day had been equal to or lower than the prescribed reference value in consideration of plans for the other day. For example, a determination can be made instantaneously that the consumed power amount of the given day had been equal to or lower than the prescribed reference value because the user went on a trip and was not at home on the other day.

As described above, since existing calendar data which displays plans of the user and, at the same time, displays a consumed power amount is used, a reason of a consumed power amount on each day being high or low can be determined instantaneously. For example, when consumed power amount is managed on a per week or per month basis, the present aspect can effectively support appropriate management.

Therefore, according to the present aspect, for example, when the consumed power amount of the given day exceeds the prescribed reference value or when the consumed power amount of the other day is equal to or lower than the prescribed reference value, existing calendar data is used instead of separately generating and displaying a parameter that is used only to show a reason thereof. As a result, an improvement in operability can be achieved by having calendar data that is a user interface familiar to the user serve a double function without increasing the number of displays that the user must check.

In addition, when a user confirms a plan of the user using the calendar data, the user is to confirm a consumed power amount associated with the user on a per day basis.

Therefore, before the present day, the user is to recognize a ratio of days on which the consumed power amount exceeded the prescribed reference value to the days on which the consumed power amount was equal to or lower than the prescribed reference value every time the user views the calendar data. For example, when the ratio of days on which the consumed power amount exceeded the prescribed reference value is higher than the ratio of the days on which the consumed power amount was equal to or lower than the prescribed reference value, the user can be made aware that actions to suppress the consumed power amount is required after the present day.

As a result, since the user is effectively guided towards energy saving behavior by being made aware of the consumed power amount after the present day, a reduction in an average value of the consumed power amount on each day to or below the reference value can be promoted for the entire concerned month.

In addition, instead of having a consumed power amount be represented without modification in numerals in the calendar data, the consumed power amount is displayed using a first display indicating that a consumed power amount associated with the user exceeds a prescribed reference value or a second display indicating that the consumed power amount associated with the user is equal to or lower than the prescribed reference value. Therefore, as described above, the user can be made aware of the consumed power amount in a simple data format as a ratio of days on which the consumed power amount exceeded the prescribed reference value to the days on which the consumed power amount was equal to or lower than the prescribed reference value. As a result, the attention of the user can be readily guided to the consumed power amount when the user confirms the calendar data.

Moreover, the information indicating a consumed power amount received from the information management system may be information already tallied per day or may be information per a predetermined time unit among one day. When the information indicating a consumed power amount received from the information management system is information per a predetermined time unit among one day, the communication device is to tally the information into per day information.

Moreover, the information indicating a consumed power amount may be received from a measuring unit connected to a distribution panel that supplies power to an electric appliance in the information management system.
(2) In the first aspect described above, for example,
   when the present day of the concerned month or the concerned week shifts to the following day, the first display or the second display may be displayed in accordance with a consumed power amount of the present day of the concerned month or the concerned week in a region corresponding to the present day of the concerned month or the concerned week before the shift to the following day.
(3) In the first aspect described above, for example,
   when the present day of the concerned month or the concerned week shifts to the following day, the first display or the second display may be caused to be displayed in accordance with a consumed power amount of the present day of the concerned month or the concerned week in a region corresponding to the present day before the shift to the following day.

According to the present aspect, every time the present day of the concerned month or the concerned week shifts to the following day, the first display or the second display is provided in a region corresponding to the present day of the concerned month or the concerned week before the shift to the following day. In other words, the display of the calendar data is updated each day. Therefore, a latest status of the consumed power amount up to the previous day can be confirmed everyday using the calendar data, and a trend of the consumed power amount of the concerned month or the concerned week can be recognized with respect to the entire concerned month.
(4) In the first aspect described above, for example,
   the first display may include a display using a first color and the second display may include a display using a second color that differs from the first color.

According to the present aspect, the consumed power amount on each day is to be presented using the first color or the second color. Therefore, when the consumed power amount of one day is displayed as, for example, 250 kWh, it is not necessarily easy for a general user to determine whether the number is high or low as compared to a general household. In contrast, in the present aspect, by displaying the consumed power amount on each day using the first color or the second color, the user can be readily made aware that the consumed power amount on each day is high or low. As a result, if the user becomes aware that the consumed power amount of a given day is high, the user can be readily guided to energy saving behavior for suppressing the consumed power amount of the following day.
(5) In the first aspect described above, for example, further causing the computer of the communication device to:
   calculate the number of guideline days which indicates how many days in the concerned month or the concerned week after the present day must have a consumed power amount that is equal to or below the prescribed reference value in order to make an average consumed power amount of the concerned month or the concerned week to be equal to or lower than a target value of the average consumed power amount of the concerned month or the concerned week; and
   display first advice information indicating whether the number of the guideline days is higher or lower than the remaining number of days of the concerned month or the concerned week.

The smaller the remaining number of days of the concerned month or the concerned week, the less likely that an average consumed power amount of the concerned month can be lowered to or below a target value for the concerned month or the concerned week if the number of days for which a consumed power amount on each day exceeds the prescribed reference value increases. Therefore, in the present aspect, as a certain guideline, the number of guideline days is calculated which indicates the number of days after the present day of the concerned month or the concerned week for which a consumed power amount on each day must be equal to or below the prescribed reference value in order to make an average consumed power amount of the concerned month or the concerned week to be equal to or lower than the prescribed reference value. In addition, first advice information indicating whether the number of guideline days is higher or lower than the remaining number of days of the concerned month or the concerned week is displayed. Accordingly, information for determining that there is still leeway in the consumed power amount for the concerned month or the concerned week may be presented to the user when the number of guideline days is larger than the remaining number of days, and information for determining that the consumed power amount needs to be suppressed for the present month may be presented to the user when the number of guideline days is smaller than the remaining number of days.
(6) In the first aspect described above, for example, further causing the computer of the communication device to:
   calculate the number of guideline which indicates how many days in the concerned month or the concerned week after the present day must have a consumed power amount that is equal to or below the prescribed reference value in order to make a total consumed power amount of the concerned month or the concerned week to be equal to or lower than a target value of the total consumed power amount of the concerned month or the concerned week; and
   display second advice information indicating whether the number of the guideline days is higher or lower than the remaining number of days of the concerned month or the concerned week.

In the present aspect, the smaller the remaining number of days of the concerned month or the concerned week, the less likely that a total consumed power amount of the concerned month or the concerned week can be lowered to or below a target value for the concerned month or the concerned week if the number of days for which a consumed power amount on each day exceeds the prescribed reference value increases. Therefore, in the present aspect, as a certain guideline, the number of guideline days is calculated which indicates the number of days after the present day of the concerned month or the concerned week for which a consumed power amount on each day must be equal to or below the prescribed reference value in order to make a total consumed power amount of the concerned month or the concerned week to be equal to or lower than a target value for the concerned month or the concerned week. In addition, second advice information indicating whether the number of guideline days is higher or lower than the remaining number of days of the concerned month or the concerned week is displayed. Accordingly, information for determining that there is still leeway in the consumed power amount for the concerned month or the concerned week may be presented to the user when the number of guideline days is larger than the remaining number of days, and information for determining that the consumed power amount needs to be suppressed for the present month may be presented to the user when the number of guideline days is smaller than the remaining number of days.
(7) In the first aspect described above, for example,
   when the present day of the concerned month or the concerned week shifts to the following day, the first advice information may be updated to include the consumed power amount of the present day before the shift.
(8) In the first aspect described above, for example,
   when the present day of the concerned month or the concerned week shifts to the following day, the second advice information may be updated to include the consumed power amount of the present day before the shift.
(9) In the first aspect described above, for example, further causing the computer of the communication device to:
   display, based on the received information indicating the consumed power amount, first display data indicating that any day before the present day of the concerned month or the concerned week may include a day with a lowest consumed power amount in a region which is displayed in the calendar data and which corresponds to the day.
(10) In the first aspect described above, for example,
   display, based on the received information indicating the consumed power amount, second display data indicating that any day before the present day of the concerned month or the concerned week may include a day with a highest consumed power amount in a region which is displayed in the calendar data and which corresponds to the day.
(11) In the first aspect described above, for example, further causing the computer of the communication device to:
   display a device display representing an electric appliance with a highest consumed power amount in a region among each day before the present day of the concerned month or the concerned week.

According to the present aspect, which electric appliance has the highest consumed power amount on each day can be confirmed.
(12) A program according to the first aspect described above is, for example,
   a program to be executed by a communication device which includes a display and which is connected via a network to an information management system that collects and manages log information of an electric appliance,
   the communication device including a memory that manages schedule information of a user of the communication device,
   the program causing a computer of the communication device to:
   receive an instruction to display on the display calendar data representing each day on a per month or per week basis;
   receive information indicating a consumed power amount associated with the user from the information management system via the network;
   generate calendar data combining a first display indicating that the consumed power amount associated with the user exceeds a prescribed reference value and a second display indicating that the consumed power amount associated with the user is equal to or lower than the prescribed reference value, in each region corresponding to each day before a present day of a concerned month or a concerned week based on the managed schedule information and the received information indicating the consumed power amount, and display the calendar data on the display.
(13) In addition, for example, the communication device according to the first aspect includes a memory that manages schedule information of the user and is mounted with the program.
(14) A second aspect of the present disclosure provides
   a method for controlling a communication device which includes a display and which is connected via a network to an information management system that collects and manages log information including a consumed power amount of an electric appliance via a network,
   the method causing a computer of the communication device,
   receive an instruction to display on the display calendar data representing each day on a per month or per week basis on the display;
   receive schedule information of a user of the communication device from the information management system via the network in response to the instruction;
   receive information indicating a consumed power amount associated with the user from the information management system via the network;
   generate calendar data combining a first display indicating that the consumed power amount associated with the user exceeds a prescribed reference value and a second display indicating that the consumed power amount associated with the user is equal to or lower than the prescribed reference value, in each region corresponding to each day before a present day of a concerned month or a concerned week based on the received schedule information and the received information indicating the consumed power amount; and
   display the calendar data on the display.

The present aspect provides calendar data to be displayed on a display of a communication device of the user. The calendar data is displayed by combining a first display indicating that a consumed power amount associated with the user exceeds a prescribed reference value and a second display indicating that the consumed power amount associated with the user is equal to or lower than the prescribed reference value in a region corresponding to each day before the present day of a concerned month or a concerned week. In other words, the calendar data doubles as a screen for displaying plans of the user and a screen representing a consumed power amount.

Accordingly, for example, when the consumed power amount of a given day exceeds the prescribed reference value, plans for the given day can be confirmed using the calendar data. Therefore, the user can determine why the consumed power amount of the given day had exceeded the prescribed reference value in consideration of plans for the given day. For example, a determination can be made instantaneously that the consumed power amount of the given day had exceeded the prescribed reference value because the user spent the whole day at home.

In a similar manner, for example, when the consumed power amount of another day is equal to or lower than the prescribed reference value, plans for the other day can be confirmed using the calendar data. Therefore, the user can determine why the consumed power amount of the other day had been equal to or lower than the prescribed reference value in consideration of plans for the other day. For example, a determination can be made instantaneously that the consumed power amount of the given day had been equal to or lower than the prescribed reference value because the user went on a trip and was not at home on the other day.

As described above, since existing calendar data which displays plans of the user and, at the same time, displays a consumed power amount is used, a reason of a consumed power amount on each day being high or low can be determined instantaneously. For example, when consumed power amount is managed on a per week or per month basis, the present aspect can effectively support appropriate management.

Therefore, according to the present aspect, for example, when the consumed power amount of the given day exceeds the prescribed reference value or when the consumed power amount of the other day is equal to or lower than the prescribed reference value, existing calendar data is used instead of separately generating and displaying a parameter that is used only to show a reason thereof. As a result, an improvement in operability can be achieved by having calendar data that is a user interface familiar to the user serve a double function without increasing the number of displays that the user must check.

In addition, when a user confirms a plan of the user using the calendar data, the user is to confirm a consumed power amount associated with the user on a per day basis.

Therefore, before the present day, the user is to recognize a ratio of days on which the consumed power amount exceeded the prescribed reference value to the days on which the consumed power amount was equal to or lower than the prescribed reference value every time the user views the calendar data. For example, when the ratio of days on which the consumed power amount exceeded the prescribed reference value is higher than the ratio of the days on which the consumed power amount was equal to or lower than the prescribed reference value, the user can be made aware that actions to suppress the consumed power amount is required after the present day.

As a result, since the user is effectively guided towards energy saving behavior by being made aware of the consumed power amount after the present day, a reduction in an average value of the consumed power amount on each day to or below the reference value can be promoted for the entire concerned month.

In addition, instead of having a consumed power amount be represented without modification in numerals in the calendar data, the consumed power amount is displayed using a first display indicating that a consumed power amount associated with the user exceeds a prescribed reference value or a second display indicating that the consumed power amount associated with the user is equal to or lower than the prescribed reference value. Therefore, as described above, the user can be made aware of the consumed power amount in a simple data format as a ratio of days on which the consumed power amount exceeded the prescribed reference value to the days on which the consumed power amount was equal to or lower than the prescribed reference value. As a result, the attention of the user can be readily guided to the consumed power amount when the user confirms the calendar data.

Moreover, the information indicating a consumed power amount received from the information management system may be information already tallied per day or may be information per a predetermined time unit among one day. When the information indicating a consumed power amount received from the information management system is information per a predetermined time unit among one day, the communication device is to tally the information into per day information.

Moreover, the information indicating a consumed power amount may be received from a measuring unit connected to a distribution panel that supplies power to an electric appliance in the information management system.
(15) In the second aspect described above, for example,
   a plan of the user may be registrable to the communication device in each region corresponding to each day displayed in the calendar data.
(16) In the second aspect described above, for example,
   when the present day of the concerned month or the concerned week shifts to the following day, the first display or the second display may be caused to be displayed in accordance with a consumed power amount of the present day of the concerned month or the concerned week in a region corresponding to the present day before the shift to the following day.

According to the present aspect, every time the present day of the concerned month or the concerned week shifts to the following day, the first display or the second display is provided in a region corresponding to the present day of the concerned month or the concerned week before the shift to the following day. In other words, the display of the calendar data is updated each day. Therefore, a latest status of the consumed power amount up to the previous day can be confirmed everyday using the calendar data, and a trend of the consumed power amount of the concerned month or the concerned week can be recognized with respect to the entire concerned month.
(17) In the second aspect described above, for example,
   the first display may include a display using a first color and the second display may include a display using a second color that differs from the first color.

According to the present aspect, the consumed power amount on each day is to be presented using the first color or the second color. Therefore, when the consumed power amount of one day is displayed as, for example, 250 kWh, it is not necessarily easy for a general user to determine whether the number is high or low as compared to a general household. In contrast, in the present aspect, by presenting the consumed power amount on each day using the first color or the second color, the user can be readily made aware that the consumed power amount on each day is high or low. As a result, if the user becomes aware that the consumed power amount of a given day is high, the user can be readily guided to energy saving behavior for suppressing the consumed power amount of the following day.
(18) In the second aspect described above, for example, further causing the computer of the communication device to:
   calculate the number of guideline days which indicates how many days in the concerned month or the concerned week after the present day must have a consumed power amount that is equal to or below the prescribed reference value in order to make an average consumed power amount of the concerned month or the concerned week to be equal to or lower than a target value of the average consumed power amount of the concerned month or the concerned week; and
   display first advice information indicating whether the number of the guideline days is higher or lower than the remaining number of days of the concerned month or the concerned week.

The smaller the remaining number of days of the concerned month or the concerned week, the less likely that an average consumed power amount of the concerned month can be lowered to or below a target value for the concerned month or the concerned week if the number of days for which a consumed power amount on each day exceeds the prescribed reference value increases. Therefore, in the present aspect, as a certain guideline, the number of guideline days is calculated which indicates the number of days after the present day of the concerned month or the concerned week for which a consumed power amount on each day must be equal to or below the prescribed reference value in order to make an average consumed power amount of the concerned month or the concerned week equal to or lower than the prescribed reference value. In addition, first advice information indicating whether the number of guideline days is higher or lower than the remaining number of days of the concerned month or the concerned week is displayed. Accordingly, information for determining that there is still leeway in the consumed power amount for the concerned month or the concerned week may be presented to the user when the number of guideline days is larger than the remaining number of days, and information for determining that the consumed power amount needs to be suppressed for the present month may be presented to the user when the number of guideline days is smaller than the remaining number of days.
(19) In the second aspect described above, for example, further causing the computer of the communication device to:
   calculate the number of guideline days which indicates how many days in the concerned month or the concerned week after the present day must have a consumed power amount that is equal to or below the prescribed reference value in order to make a total consumed power amount of the concerned month or the concerned week to be equal to or lower than a target value of the total consumed power amount of the concerned month or the concerned week; and display second advice information indicating whether the number of the guideline days is higher or lower than the remaining number of days of the concerned month or the concerned week

In the present aspect, the smaller the remaining number of days of the concerned month or the concerned week, the less likely that a total consumed power amount of the concerned month or the concerned week can be lowered to or below a target value for the concerned month or the concerned week if the number of days for which a consumed power amount on each day exceeds the prescribed reference value increases. Therefore, in the present aspect, as a certain guideline, the number of guideline days is calculated which indicates the number of days after the present day of the concerned month or the concerned week for which a consumed power amount on each day must be equal to or below the prescribed reference value in order to make a total consumed power amount of the concerned month or the concerned week to be equal to or lower than a target value for the concerned month or the concerned week. In addition, second advice information indicating whether the number of guideline days is higher or lower than the remaining number of days of the concerned month or the concerned week is displayed. Accordingly, information for determining that there is still leeway in the consumed power amount for the concerned month or the concerned week may be presented to the user when the number of guideline days is larger than the remaining number of days, and information for determining that the consumed power amount needs to be suppressed for the present month may be presented to the user when the number of guideline days is smaller than the remaining number of days.
(20) In the second aspect described above, for example,
   when the present day of the concerned month or the concerned week shifts to the following day, the first advice information may be updated to include the consumed power amount of the present day before the shift.
(21) In the second aspect described above, for example,
   when the present day of the concerned month or the concerned week shifts to the following day, the second advice information may be updated to include the consumed power amount of the present day before the shift.
(22) In the second aspect described above, for example, further causing the computer of the communication device to:
   display, based on the received information indicating the consumed power amount, first display data indicating that any day before the present day of the concerned month or the concerned week may include a day with a lowest consumed power amount in a region which is displayed in the calendar data and which corresponds to the day.
(23) In the second aspect described above, for example, further causing the computer of the communication device to:
   display, based on the received information indicating the consumed power amount, second display data indicating that any day before the present day of the concerned month or the concerned week may include a day with a highest consumed power amount, in a region which is displayed in the calendar data and which corresponds to the day.
(24) In the second aspect described above, for example, further causing the computer of the communication device to:
   display a device display representing an electric appliance with a highest consumed power amount, in a corresponding region among each day before the present day of the concerned month or the concerned week.

According to the present aspect, which electric appliance has the highest consumed power amount on each day can be confirmed.
(25) A program according to the second aspect described above is, for example,
   a program to be executed by a communication device which includes a display and which is connected via a network to an information management system that collects and manages log information of an electric appliance,
   the program causing a computer of the communication device to:
   receive an instruction to display on the display calendar data representing each day on a per month or per week basis;
   receive schedule information of a user of the communication device from the information management system via the network in response to the instruction;
   receive information indicating a consumed power amount associated with the user from the information management system via the network;
   generate calendar data combining a first display indicating that the consumed power amount associated with the user exceeds a prescribed reference value and a second display indicating that the consumed power amount associated with the user is equal to or lower than the prescribed reference value, in each region corresponding to each day before a present day of a concerned month or a concerned week based on the received schedule information and the received information indicating the consumed power amount; and
   display the calendar data on the display.
(26) In addition, a communication device according to the second aspect described above is, for example, mounted with the program.
(27) A third aspect of the present disclosure provides
   a method for providing information in an information management system that collects and manages log information including a consumed power amount of an electric appliance via a network, the information method including:
   receiving a request to display, on a display, calendar data representing schedule information of a user associated with the electric appliance for each day on a per month or per week basis, from a communication device of the user via the network;
   inputting the schedule information of the user from a memory that manages the schedule information of the user to generate the calendar data in response to the request;
   generating, based on information indicating a consumed power amount associated with the user, calendar data combining a first display indicating that the consumed power amount associated with the user exceeds a prescribed reference value and a second display indicating that the consumed power amount associated with the user is equal to or lower than the prescribed reference value, in each region corresponding to each day before a present day of a concerned month or a concerned week; and
   transmitting the calendar data to the communication device via the network to be displayed on the display of the communication device.

The present aspect provides calendar data to be displayed on a display of a communication device of the user. The calendar data is displayed by combining a first display indicating that a consumed power amount associated with the user exceeds a prescribed reference value and a second display indicating that the consumed power amount associated with the user is equal to or lower than the prescribed reference value in a region corresponding to each day before the present day of a concerned month or a concerned week. In other words, the calendar data doubles as a screen for displaying plans of the user and a screen representing a consumed power amount.

Accordingly, for example, when the consumed power amount of a given day exceeds the prescribed reference value, plans for the given day can be confirmed using the calendar data. Therefore, the user can determine why the consumed power amount of the given day had exceeded the prescribed reference value in consideration of plans for the given day. For example, a determination can be made instantaneously that the consumed power amount of the given day had exceeded the prescribed reference value because the user spent the whole day at home.

In a similar manner, for example, when the consumed power amount of another day is equal to or lower than the prescribed reference value, plans for the other day can be confirmed using the calendar data. Therefore, the user can determine why the consumed power amount of the other day had been equal to or lower than the prescribed reference value in consideration of plans for the other day. For example, a determination can be made instantaneously that the consumed power amount of the given day had been equal to or lower than the prescribed reference value because the user went on a trip and was not at home on the other day.

As described above, since existing calendar data which displays plans of the user and, at the same time, displays a consumed power amount is used, a reason of a consumed power amount on each day being high or low can be determined instantaneously. For example, when consumed power amount is managed on a per week or per month basis, the present aspect can effectively support appropriate management.

Therefore, according to the present aspect, for example, when the consumed power amount of the given day exceeds the prescribed reference value or when the consumed power amount of the other day is equal to or lower than the prescribed reference value, existing calendar data is used instead of separately generating and displaying a parameter that is used only to show a reason thereof. As a result, an improvement in operability can be achieved by having calendar data that is a user interface familiar to the user serve a double function without increasing the number of displays that the user must check.

In addition, when a user confirms a plan of the user using the calendar data, the user is to confirm a consumed power amount associated with the user on a per day basis.

Therefore, before the present day, the user is to recognize a ratio of days on which the consumed power amount exceeded the prescribed reference value to the days on which the consumed power amount was equal to or lower than the prescribed reference value every time the user views the calendar data. For example, when the ratio of days on which the consumed power amount exceeded the prescribed reference value is higher than the ratio of the days on which the consumed power amount was equal to or lower than the prescribed reference value, the user can be made aware that actions to suppress the consumed power amount is required after the present day.

As a result, since the user is effectively guided towards energy saving behavior by being made aware of the consumed power amount after the present day, a reduction in an average value of the consumed power amount on each day to or below the reference value can be promoted for the entire concerned month.

In addition, instead of having a consumed power amount be represented without modification in numerals in the calendar data, the consumed power amount is displayed using a first display indicating that a consumed power amount associated with the user exceeds a prescribed reference value or a second display indicating that the consumed power amount associated with the user is equal to or lower than the prescribed reference value. Therefore, as described above, the user can be made aware of the consumed power amount in a simple data format as a ratio of days on which the consumed power amount exceeded the prescribed reference value to the days on which the consumed power amount was equal to or lower than the prescribed reference value. As a result, the attention of the user can be readily guided to the consumed power amount when the user confirms the calendar data. Moreover, the memory that manages schedule information of the user may be provided in a different server device in the information management system.
(28) In the third aspect described above, for example,
   a plan of the user may be registrable to the communication device in each region corresponding to each day displayed in the calendar data.
(29) In the third aspect described above, for example,
   when the present day of the concerned month or the concerned week shifts to the following day, the first display or the second display may be displayed in accordance with a consumed power amount of the present day of the concerned month or the concerned week in a region corresponding to the present day before the shift to the following day.

According to the present aspect, every time the present day of the concerned month or the concerned week shifts to the following day, the first display or the second display is provided in a region corresponding to the present day of the concerned month or the concerned week before the shift to the following day. In other words, the display of the calendar data is updated each day. Therefore, a latest status of the consumed power amount up to the previous day can be confirmed everyday using the calendar data, and a trend of the consumed power amount of the concerned month or the concerned week can be recognized with respect to the entire concerned month.
(30) In the third aspect described above, for example,
   the first display may include a display using a first color and the second display may include a display using a second color that differs from the first color.

According to the present aspect, the consumed power amount on each day is to be presented using the first color or the second color. Therefore, when the consumed power amount of one day is displayed as, for example, 250 kWh, it is not necessarily easy for a general user to determine whether the number is high or low as compared to a general household. In contrast, in the present aspect, by presenting the consumed power amount on each day using the first color or the second color, the user can be readily made aware that the consumed power amount on each day is high or low. As a result, if the user becomes aware that the consumed power amount of a given day is high, the user can be readily guided to energy saving behavior for suppressing the consumed power amount of the following day.
(31) In the third aspect described above, for example, further causing the computer of the communication device to:
   calculate the number of guideline days which indicates how many days in the concerned month or the concerned week after the present day must have a consumed power amount that is equal to or below the prescribed reference value in order to make an average consumed power amount of the concerned month or the concerned week to be equal to or lower than a target value of the average consumed power amount of the concerned month or the concerned week; and
   display first advice information indicating whether the number of the guideline days is higher or lower than the remaining number of days of the concerned month or the concerned week.

The smaller the remaining number of days of the concerned month or the concerned week, the less likely that an average consumed power amount of the concerned month can be lowered to or below a target value for the concerned month or the concerned week if the number of days for which a consumed power amount on each day exceeds the prescribed reference value increases. Therefore, in the present aspect, as a certain guideline, the number of guideline days is calculated which indicates the number of days after the present day of the concerned month or the concerned week for which a consumed power amount on each day must be equal to or below the prescribed reference value in order to make an average consumed power amount of the concerned month or the concerned week to be equal to or lower than the prescribed reference value. In addition, first advice information indicating whether the number of guideline days is higher or lower than the remaining number of days of the concerned month or the concerned week is displayed. Accordingly, information for determining that there is still leeway in the consumed power amount for the concerned month or the concerned week may be presented to the user when the number of guideline days is larger than the remaining number of days, and information for determining that the consumed power amount needs to be suppressed for the present month may be presented to the user when the number of guideline days is smaller than the remaining number of days.
(32) In the third aspect described above, for example, further causing the computer of the communication device to:
   calculate the number of guideline days which indicates how many days in the concerned month or the concerned week after the present day must have a consumed power amount that is equal to or below the prescribed reference value in order to make a total consumed power amount of the concerned month or the concerned week to be equal to or lower than a target value of the total consumed power amount of the concerned month or the concerned week; and
   display second advice information indicating whether the number of the guideline days is higher or lower than the remaining number of days of the concerned month or the concerned week.

In the present aspect, the smaller the remaining number of days of the concerned month or the concerned week, the less likely that a total consumed power amount of the concerned month or the concerned week can be lowered to or below a target value for the concerned month or the concerned week if the number of days for which a consumed power amount on each day exceeds the prescribed reference value increases. Therefore, in the present aspect, as a certain guideline, the number of guideline days is calculated which indicates the number of days after the present day of the concerned month or the concerned week for which a consumed power amount on each day must be equal to or below the prescribed reference value in order to make a total consumed power amount of the concerned month or the concerned week to be equal to or lower than a target value for the concerned month or the concerned week. In addition, second advice information indicating whether the number of guideline days is higher or lower than the remaining number of days of the concerned month or the concerned week is displayed. Accordingly, information for determining that there is still leeway in the consumed power amount for the concerned month or the concerned week may be presented to the user when the number of guideline days is larger than the remaining number of days, and information for determining that the consumed power amount needs to be suppressed for the present month may be presented to the user when the number of guideline days is smaller than the remaining number of days.
(33) In the third aspect described above, for example,
   when the present day of the concerned month or the concerned week shifts to the following day, the first advice information may be updated to include the consumed power amount of the present day before the shift.
(34) In the third aspect described above, for example,
   when the present day of the concerned month or the concerned week shifts to the following day, the second advice information may be updated to include the consumed power amount of the present day before the shift.
(35) In the third aspect described above, for example, further causing the computer of the communication device to:
   display, based on the information indicating a consumed power amount associated with the user, first display data indicating that any day before the present day of the concerned month or the concerned week may include a day with a lowest consumed power amount, in a region which is displayed in the calendar data and which corresponds to the day.
(36) In the third aspect described above, for example, further causing the computer of the communication device to:
   display, based on the information indicating a consumed power amount associated with the user, second display data indicating that any day before the present day of the concerned month or the concerned week may include a day with a highest consumed power amount, in a region which is displayed in the calendar data and which corresponds to the day.
(37) In the third aspect described above, for example, further causing the computer of the communication device to:
   display a device display representing an electric appliance with a highest consumed power amount, in a corresponding region among each day before the present day of the concerned month or the concerned week.

According to the present aspect, which electric appliance has the highest consumed power amount on each day can be confirmed.

Modifications of the present disclosure include the aspects described below.
(38) A first aspect according to a modification of the present disclosure provides
   a method for controlling a communication device which includes a display and which is connected via a network to an information management system that collects and manages log information including a consumed power amount of an electric appliance,
   the communication device including a memory that manages schedule information of a user of the communication device,
the method causing a computer of the communication device to:
   receive an instruction to display on the display calendar data representing each day on a per month or per week basis;
   receive information indicating a consumed power amount associated with the user from the information management system via the network; and
   generate, based on the managed schedule information and the received information indicating the consumed power amount, calendar data combining each numeral representing a consumed power amount associated with the user in each region corresponding to each day before a present day of a concerned month or a concerned week; and
   display on the display the calendar data combining each numeral representing the consumed power amount associated with the user.

The present aspect provides calendar data to be displayed on a display of a communication device of the user. The calendar data is displayed in a region corresponding to each day before the present day of the concerned month or the concerned week by combining numerals representing a consumed power amount associated with the user. In other words, the calendar data doubles as a screen for displaying plans of the user and a screen representing a consumed power amount.

Accordingly, when a user confirms a plan of the user using the calendar data, the user is to confirm a consumed power amount associated with the user on a per day basis. Therefore, the user can determine why the consumed power amount on each day is the prescribed reference value represented by the numerals in consideration of plans for each day. For example, a determination can be made instantaneously that the consumed power amount of the given day is the prescribed reference value represented by the numerals because the user spent the whole day at home. In a similar manner, for example, a determination can be made instantaneously that the consumed power amount of the other day is the prescribed reference value represented by the numerals because the user went on a trip and was not at home on the other day.

As described above, since existing calendar data which displays plans of the user and, at the same time, displays a consumed power amount is used, a reason of a consumed power amount on each day being high or low can be determined instantaneously. For example, when consumed power amount is managed on a per week or per month basis, the present aspect can effectively support appropriate management.
(39) A second aspect according to a modification of the present disclosure provides
   a method for controlling a communication device which includes a display and which is connected to an information management system that collects and manages log information including a consumed power amount of an electric appliance via a network,
   the method causing a computer of the communication device to:
   accept an instruction to display calendar data representing each day on a per month or per week basis on the display;
   receive schedule information of a user of the communication device from the information management system via the network in response to the instruction;
   receive information indicating a consumed power amount associated with the user from the information management system via the network; and
   combine numerals representing a consumed power amount associated with the user and display the combined numerals on the display in a region corresponding to each day before the present day of the concerned month or the concerned week based on the received schedule information and the received information indicating the consumed power amount.
   According to the present aspect, an effect similar to that of the first aspect according to a modification of the present disclosure is produced.
(40) A third aspect according to a modification of the present disclosure provides
   a method for providing an information in an information management system that collects and manages log information including a consumed power amount of an electric appliance via a network, the information method including:
   receiving a request to display, on a display, calendar data representing schedule information of a user associated with the electric appliance for each day on a per month or per week basis, from a communication device of the user via the network;
   inputting the schedule information of the user from a memory that manages the schedule information of the user to generate the calendar data in response to the request;
   generating, based on information indicating a consumed power amount associated with the user, calendar data combining each numeral representing the consumed power amount associated with the user in each region corresponding to each day before a present day of a concerned month or a concerned week; and
   transmitting the calendar data to the communication device via the network to be displayed on the display of the communication device.

According to the present aspect, an effect similar to that of the first aspect according to a modification of the present disclosure is produced.

### (Examples)

Hereinafter, a management system according to the present disclosure will be described. The management system according to the present disclosure is a system that manages a used energy amount (a consumed power amount) of a house of a user.

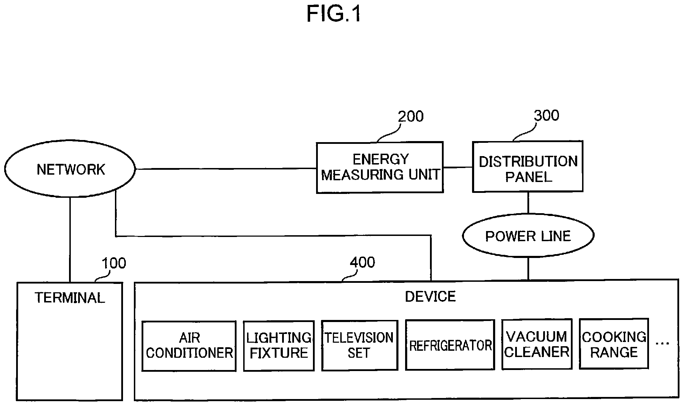

Fig. 1 is a diagram showing a first example of an overall configuration of a management system according to the present disclosure. The management system according to the first example includes a terminal 100, an energy measuring unit 200, a distribution panel 300, and a device 400. The terminal 100, the energy measuring unit 200, and the device 400 are connected via a network so as to be capable of communicating with each other. In the management system according to the first example, the respective components are, for example, installed in a single house of a user.

In addition, in the management system according to the first example, for example, a local area network is adopted as the network and various types of data are transmitted and received using the TCP/IP communication protocol. As the local area network, for example, an IEEE 802.3 series wired LAN, an IEEE 802.11 series wireless LAN, or a network that combines the two can be adopted.

The terminal 100 is constituted by, for example, a button type mobile phone, a tablet terminal, a portable computer such as a smartphone, or a stationary computer. In this case, as the terminal 100, a computer that performs the role of a home server in the house may be adopted or a computer that does not perform such a role may be adopted. Moreover, while only one terminal 100 is shown in Fig. 1, a plurality of the terminals 100 may exist so as to correspond to a plurality of users.

The energy measuring unit 200 measures a used energy amount in the house using, for example, a current value or the like measured by a current sensor included in the distribution panel 300.

The distribution panel 300 is constituted by, for example, a smart distribution panel and supplies commercial power to the device 400 via a power line. In addition, the distribution panel 300 includes a breaker, and when a current supplied to the device 400 exceeds a prescribed value, the distribution panel 300 disconnects the breaker and stops supply of the current to the device 400. For example, the distribution panel 300 includes branch circuits that supply power to one or more outlets in the house and a current sensor that senses a current flowing through each branch circuit. Moreover, the energy measuring unit 200 and the distribution panel 300 are connected so as to be capable of communicating with each other by, for example, a specific power saving communication path.

The device 400 is constituted by, for example, an electric appliance installed in the house. In the example shown in Fig. 1, an air conditioner, a lighting fixture, a television set, a refrigerator, a vacuum cleaner, and a cooking range are depicted as the device 400. However, these are simply examples and any electric appliance may be adopted as the device 400 as long the electric appliance is installed in the house of the user. Therefore, an electric appliance other than the electric appliances shown in Fig. 1 may be included in the device 400 or any of the electric appliances shown in Fig. 1 may be omitted. Examples of the device 400 not illustrated in Fig. 1 include an electric shutter and an electric curtain.

While the device 400 is installed in the house of the user in the description given above, this is merely an example and the device 400 may alternatively be installed in, for example, a building. In addition, the house may be a detached house or an apartment. Furthermore, in the example shown in Fig. 1, the energy measuring unit 200 corresponds to an example of an information management system.

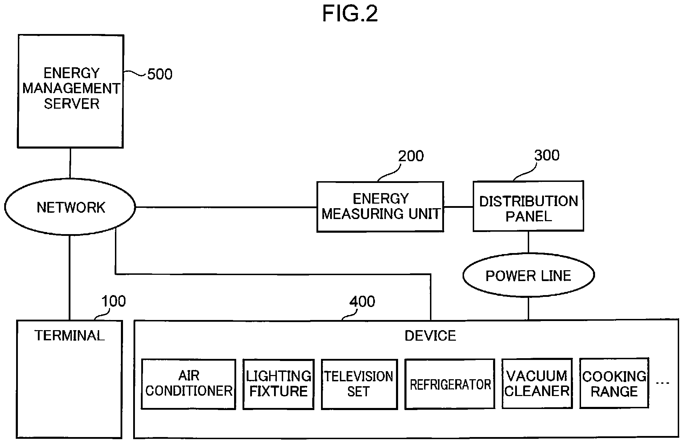

Fig. 2 is a diagram showing a second example of an overall configuration of a management system according to the present disclosure. The management system according to the second example differs from the management system according to the first example in that an energy management server 500 is further provided. The energy management server 500 is, for example, a cloud server constituted by one or more computers. In addition, the energy management server 500 manages one or more devices 400 installed in one or more houses. Moreover, in the management system shown in Fig. 2, a relationship between components in the one house and the energy management server 500 is illustrated.

In addition, in the management system according to the second example, the energy measuring unit 200 transmits energy data indicating a used energy amount of the house managed by the energy measuring unit 200 to the energy management server 500, enabling the energy management server 500 to manage energy data of respective houses in a unified manner.

In this case, as the energy management server 500, a manufacturer server is adopted which is used by a manufacturer of the device 400 to provide various services related to the device 400 to a user having purchased the device 400. Alternatively, if the management system according to the present disclosure is provided by a service provider, a service provider server managed by the service provider can be adopted. In this case, examples of the service provider include an electric power company that supplies power to the house.

Moreover, in the second example, the network includes the Internet as well as a local network. In addition, in the example shown in Fig. 2, the energy measuring unit 200 and the energy management server 500 correspond to an example of an information management system.

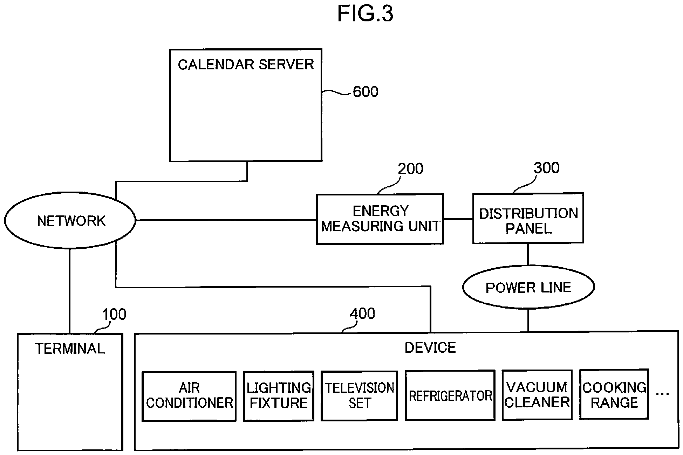

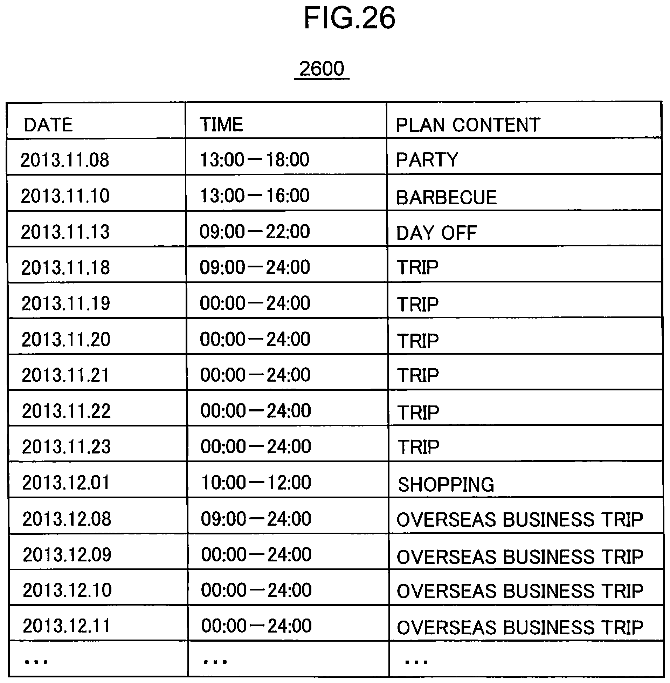

Fig. 3 is a diagram showing a third example of an overall configuration of a management system according to the present disclosure. The management system according to the third example differs from the management system according to the first example in that a calendar server 600 is further provided. The calendar server 600 is, for example, a cloud server constituted by one or more computers. In addition, the calendar server 600 manages schedule information indicating plans of each of one or more users. In this case, as the schedule information, for example, a calendar plan list 2600 shown in Fig. 26 is adopted.

While schedule information is managed by the terminal 100 in the management systems according to the first and second examples, the calendar server 600 is given the responsibility to manage schedule information in the management system according to the third example.

Moreover, in the third example, the network includes the Internet as well as a local network. Furthermore, in the example shown in Fig. 3, the energy measuring unit 200 and the calendar server 600 correspond to an example of an information management system.

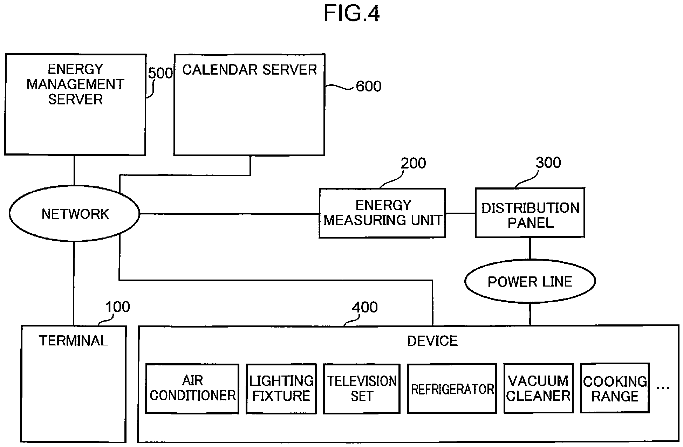

Fig. 4 is a diagram showing a fourth example of an overall configuration of a management system according to the present disclosure. The management system according to the fourth example differs from the management system according to the first example in that the energy management server 500 and the calendar server 600 are further provided.

In the management system according to the fourth example, the calendar server 600 is responsible for managing schedule information. In addition, the energy management server 500 manages used energy amounts of respective houses in a unified manner.

Moreover, in the fourth example, the network includes the Internet as well as a local network. Furthermore, in the example shown in Fig. 4, the energy measuring unit 200, the energy management server 500, and the calendar server 600 correspond to an example of an information management system.

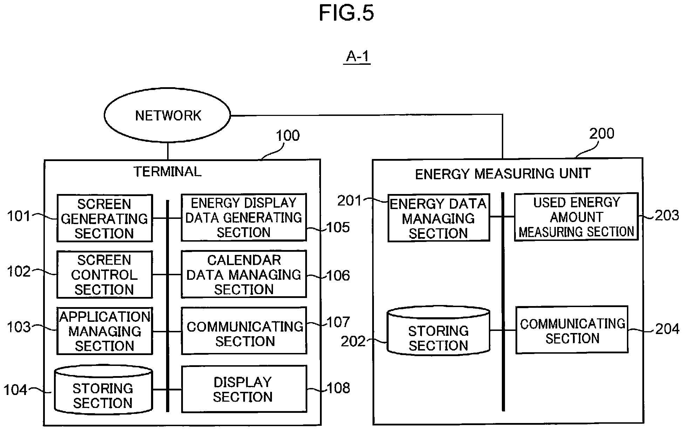

Fig. 5 is a block diagram showing a configuration pattern A-1 of the management system according to the first example. In the management system shown in Fig. 5, the terminal 100 includes a screen generating section 101, a screen control section 102, an application managing section 103, a storing section 104, an energy display data generating section 105, a calendar data managing section 106, a communicating section 107, and a display section 108.

The screen generating section 101 generates image data of various screens to be displayed by the terminal 100 and causes the screens to be displayed on the display section 108.

The screen control section 102 senses various operations performed by the user on the various screens displayed on the display section 108. In the present disclosure, a touch panel included in the display section 108 is adopted as an operating device that accepts operations by the user. Therefore, the screen control section 102 senses operations such as tapping, swiping, and flicking inputted by the user through the touch panel. In addition, when the screen control section 102 senses an operation involving tapping a GUI component displayed on the display section 108, the screen control section 102 determines that the GUI component has been selected by the user. Moreover, when a keyboard or a mouse is adopted as the operating device, the screen control section 102 may sense an operation by the user on the keyboard or an operation by the user using the mouse.

The application managing section 103 manages one or more applications installed on the terminal 100. For example, when tapping of an icon of an application is sensed by the screen control section 102 on a basic screen of the terminal 100, the application managing section 103 starts the application.

The storing section 104 stores, for example, various data that is used by the terminal 100 to perform various processes.

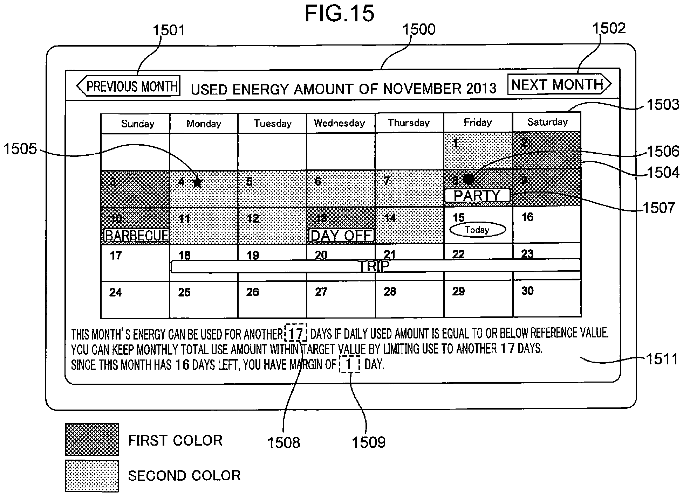

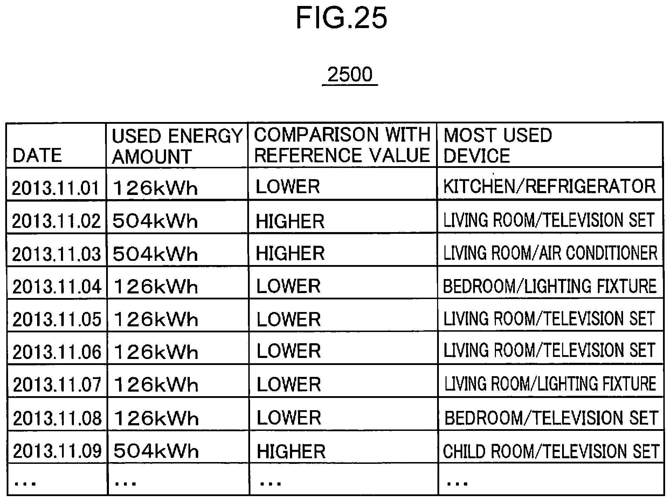

The energy display data generating section 105 creates energy display data 2500 (Fig. 25) used when creating a used amount confirmation screen 1500 (Figs. 15 to 22). In addition, the energy display data generating section 105 hands over the energy display data 2500 to the screen generating section 101 and causes the used amount confirmation screen 1500 to be displayed by the display section 108.

The calendar data managing section 106 generates schedule information, stores the schedule information in the storing section 104, and manages the schedule information.

The communicating section 107 connects the terminal 100 to the network and enables the terminal 100 to communicate with the energy measuring unit 200 and the like.

The display section 108 is constituted by, for example, a liquid crystal display including a touch panel.

The energy measuring unit 200 includes an energy data managing section 201, a storing section 202, a used energy amount measuring section 203, and a communicating section 204.

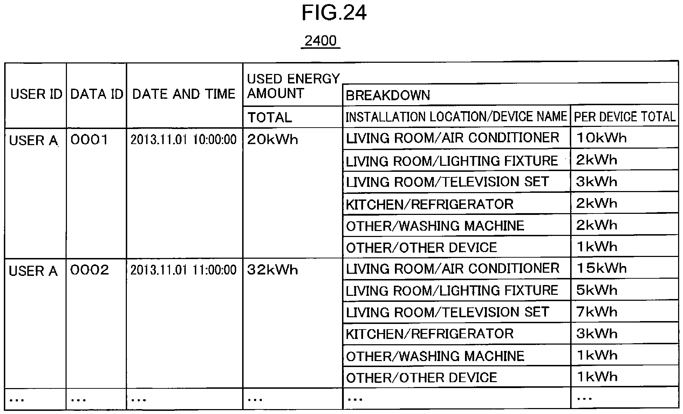

The energy data managing section 201 uses a used energy amount measured by the used energy amount measuring section 203 to generate energy data indicating a used energy amount of the house and a used energy amount of each device 400, stores the energy data in the storing section 202, and manages the energy data. Specifically, the energy data managing section 201 manages energy data by registering the energy data in energy management data 2400 (Fig. 24).

The storing section 202 stores various data that is used by the energy measuring unit 200 to perform various processes. In the present disclosure, in particular, the storing section 202 stores the energy management data 2400.

The used energy amount measuring section 203 measures a used energy amount of the entire house and a used energy amount of each device 400 using a current value or the like measured by the distribution panel 300 and hands over the used energy amounts to the energy data managing section 201.

The communicating section 204 connects the energy measuring unit 200 to the network and enables the energy measuring unit 200 to communicate with the terminal 100.

Moreover, in the terminal 100 shown in Fig. 5, the energy display data generating section 105 is realized by having, for example, a processor of the terminal 100 execute an energy management application (hereinafter described as "management application"). In addition, the calendar data managing section 106 is realized by having the processor of the terminal 100 execute an existing calendar application (hereinafter described as "calendar application"). Furthermore, the screen generating section 101 is realized by having, for example, the processor of the terminal 100 execute an operating system or a management application. Moreover, the screen control section 102 and the application managing section 103 are realized by having, for example, the processor of the terminal 100 execute an operating system.

In addition, the storing section 104 is constituted by, for example, a rewritable non-volatile storage device.

Furthermore, the communicating section 107 is constituted by a LAN and a communication device of a mobile phone.

In addition, in Fig. 5, the energy data managing section 201 and the used energy amount measuring section 203 are constituted by, for example, having a processor execute a management application. Furthermore, the storing section 202 is constituted by, for example, a rewritable non-volatile storage device. Moreover, the communicating section 204 is constituted by a communication device for connecting the energy measuring unit 200 to the network and a communication device for communicating with the distribution panel 300.

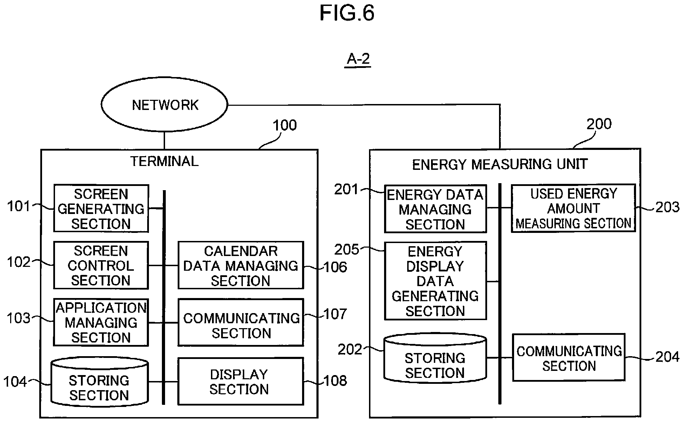

Fig. 6 is a block diagram showing a configuration pattern A-2 of the management system according to the first example. In the configuration pattern A-2, generation of the energy display data 2500 is performed by the energy measuring unit 200. Therefore, the energy display data generating section is omitted from the terminal 100 and the energy measuring unit 200 includes the energy display data generating section 205.

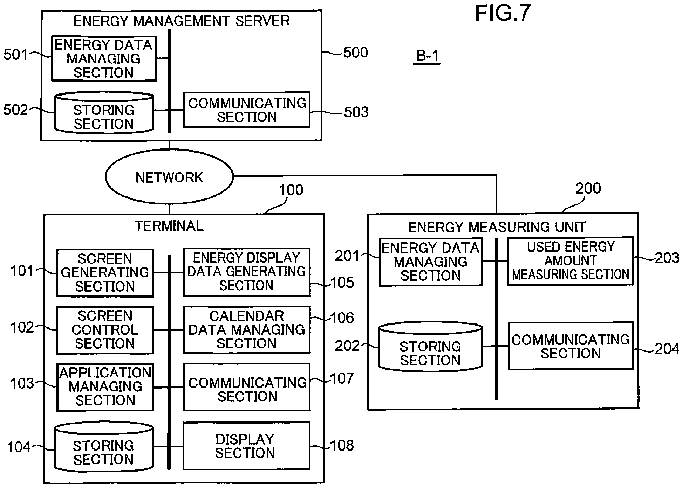

Fig. 7 is a block diagram showing a configuration pattern B-1 of the management system according to the second example. The configuration pattern B-1 differs from the configuration pattern A-1 in that the energy management server 500 is added. The energy management server 500 includes an energy data managing section 501, a storing section 502, and a communicating section 503.

The energy data managing section 501 stores energy data transmitted by the energy measuring unit 200 of each house in the storing section 502 and manages energy data of each house in a unified manner.

The storing section 502 stores, for example, energy data of each house.

The communicating section 503 connects the energy management server 500 to the network.

In the configuration pattern B-1, generation of energy display data 2500 is performed by the terminal 100. Therefore, the terminal 100 includes the energy display data generating section 105.

In Fig. 7, the energy data managing section 501 is realized by, for example, having a processor of the energy management server 500 execute a management application. The storing section 502 is constituted by a rewritable non-volatile storage device. The communicating section 503 is constituted by a communication device such as a modem.

Fig. 8 is a block diagram showing a configuration pattern B-2 of the management system according to the second example. The configuration pattern B-2 differs from the configuration pattern B-1 in that generation of the energy display data 2500 is performed by the energy management server 500. Therefore, in the configuration pattern B-2, the energy display data generating section is omitted from the terminal 100 and the energy management server 500 includes the energy display data generating section 504.

In this case, the energy display data generating section 504 is realized by, for example, having the processor of the energy management server 500 execute a management application.

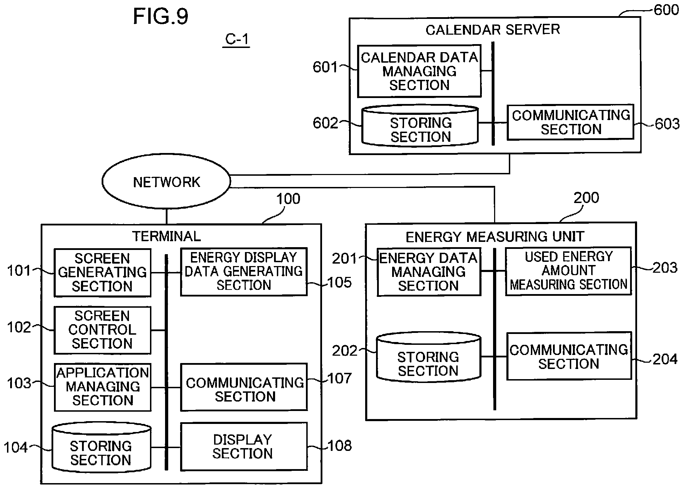

Fig. 9 is a block diagram showing a configuration pattern C-1 of the management system according to the third example. The configuration pattern C-1 differs from the configuration pattern A-1 in that the calendar server 600 is added.

The calendar server 600 includes a calendar data managing section 601, a storing section 602, and a communicating section 603.

The calendar data managing section 601 stores schedule information of each of one or more users in the storing section 602 and manages the schedule information.

The storing section 602 stores various data that is used by the calendar server 600 to perform various processes.

The communicating section 603 connects the calendar server 600 to the network.

The calendar data managing section 601 is realized by, for example, having a processor of the calendar server 600 execute a calendar server program that causes a computer to function as the calendar server 600. The storing section 602 is constituted by, for example, a rewritable non-volatile storage device. The communicating section 603 is constituted by a communication device such as a modem.

In the configuration pattern C-1, generation of the energy display data 2500 is performed by the terminal 100 and management of schedule information is performed by the calendar server 600. Therefore, the terminal 100 includes the energy display data generating section 105 while the calendar data managing section has been omitted.

Fig. 10 is a block diagram showing a configuration pattern C-2 of the management system according to the third example. The configuration pattern C-2 differs from the configuration pattern C-1 in that generation of the energy display data 2500 is performed by the energy measuring unit 200. Therefore, the energy display data generating section is omitted from the terminal 100 and the energy measuring unit 200 includes the energy display data generating section 205.

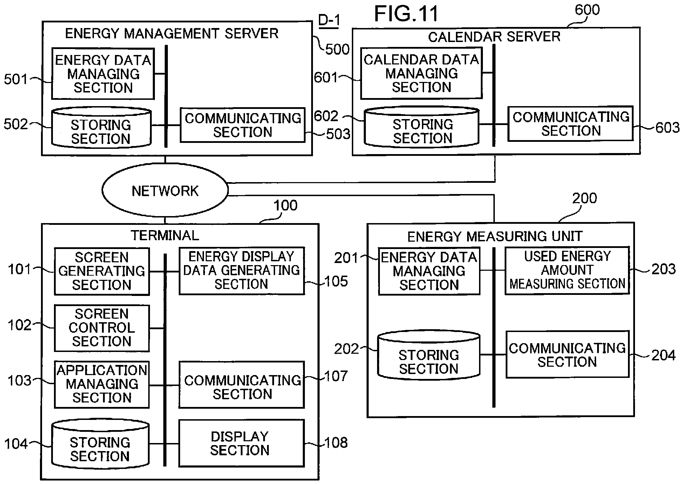

Fig. 11 is a block diagram showing a configuration pattern D-1 of the management system according to the fourth example. The configuration pattern D-1 differs from the configuration pattern A-1 in that the energy management server 500 and the calendar server 600 are added. In the configuration pattern D-1, generation of the energy display data 2500 is performed by the terminal 100 and management of schedule information is performed by the calendar server 600. Therefore, the terminal 100 includes the energy display data generating section 105 while the calendar data managing section has been omitted.

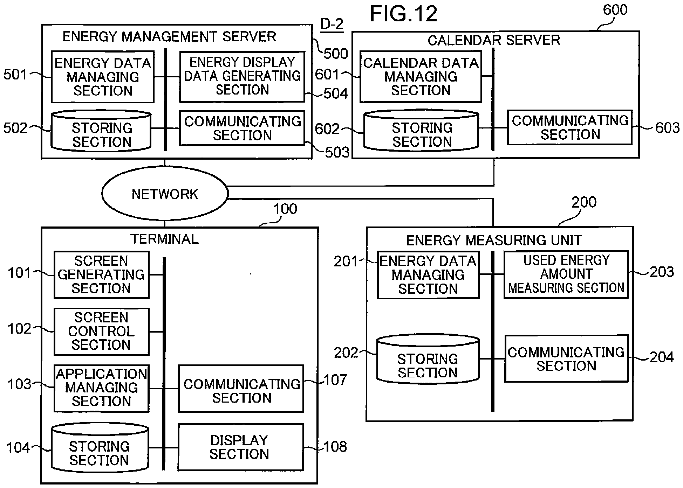

Fig. 12 is a block diagram showing a configuration pattern D-2 of the management system according to the fourth example. The configuration pattern D-2 differs from the configuration pattern D-1 in that generation of the energy display data 2500 is performed by the energy management server 500. Therefore, the energy display data generating section is omitted from the terminal 100 and the energy management server 500 includes the energy display data generating section 504.

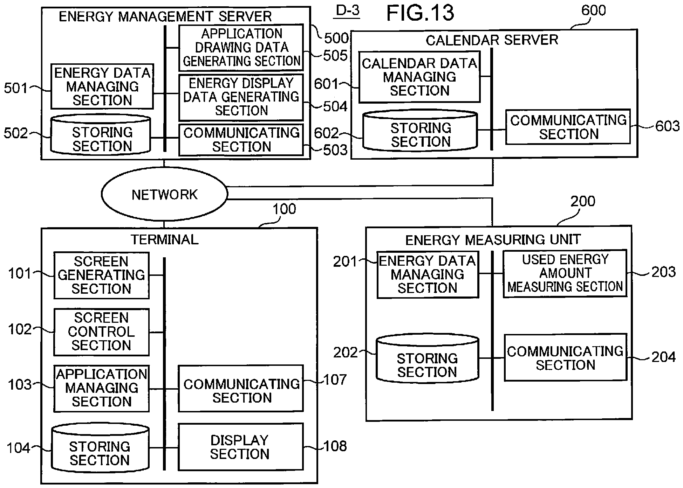

Fig. 13 is a block diagram showing a configuration pattern D-3 of the management system according to the fourth example. The configuration pattern D-3 differs from the configuration pattern D-2 in that the application drawing data generating section 505 is added. The application drawing data generating section 505 generates drawing data of the used amount confirmation screen 1500 (to be described later) using energy display data 2500 generated by the energy display data generating section 504. In this case, since the terminal 100 is able to display the used amount confirmation screen 1500 using a browser, the screen generating section 101 is constituted by a browser.

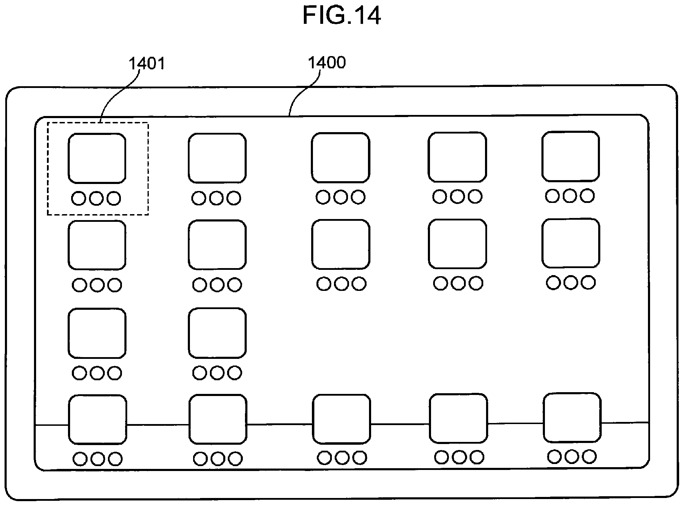

Fig. 14 is a diagram showing an example of a basic screen 1400. The basic screen 1400 is a basic screen displayed by an ordinary smartphone or a tablet terminal. The basic screen 1400 displays one or more icons for executing one or more applications in a matrix pattern. In addition, the one or more icons include a management application icon 1401 for executing a management application. In the example shown in Fig. 14, the management application icon 1401 is arranged at a top left position.

Fig. 15 is a diagram showing a first example of the used amount confirmation screen 1500. The used amount confirmation screen 1500 is a screen which is displayed when the management application icon 1401 is tapped and which is used to have the user confirm a used energy amount. A title "Used energy amount of November 2013" is set in an upper part of the used amount confirmation screen 1500 to explicitly indicate that the screen is a screen indicating an amount of energy used in November 2013. Moreover, while Fig. 15 shows the used amount confirmation screen 1500 of November 2013 and, therefore, the title reads "November 2013", another month or year is to be described when the used amount confirmation screen 1500 is for another month or year.

The used amount confirmation screen 1500 is provided with a calendar data display field 1503 in which a plan of the user generated using schedule information is shown in a calendar format. In this case, the calendar data display field 1503 is a field that displays a calendar in which days are presented on a monthly or weekly basis. In the example shown in Fig. 15, a calendar in which days are presented on a monthly basis is adopted.

The calendar data display field 1503 is constituted by 35 rectangular boxes 1504 divided in a matrix pattern by the seven days of the week from Sunday to Saturday which are arranged horizontally and five weeks arranged vertically. In this case, one box 1504 is a region indicating a day. A numeral indicating a day is displayed in each box 1504. Moreover, in the example shown in Fig. 15, a numeral indicating a day is not displayed in boxes 1504 corresponding to days which do not belong to a display target month but belong to the previous month or the following month. However, this is simply an example and days may be displayed in boxes 1504 corresponding to days which belong to the previous month or the following month.

The calendar data display field 1503 displays a schedule icon 1507 indicating a schedule of a user inputted by the user using the calendar application or the management application. The example shown in Fig. 15 displays schedule icons 1507 such as "party" on the 8th, "barbecue" on the 10th, "day off' on the 13th, and "trip" from the 18th to the 23rd. In addition, in the example shown in Fig. 15, "today" is displayed in the box 1504 corresponding to the present day to explicitly indicate the present day to the user.

Furthermore, in the calendar data display field 1503, a box 1504 of a day on which a used energy amount is higher than a reference value is displayed in its entirety by a first color, and a box 1504 of a day on which a used energy amount is equal to or lower than a reference value is displayed in its entirety by a second color that differs from the first color. In this case, as the first color, for example, red can be adopted. In addition, as the second color, any color may be adopted as long the color is distinguishable from the first color and, for example, blue can be adopted. Moreover, since color display cannot be provided in Fig. 15, the first color is depicted by hatching and the second color is depicted by dots. Therefore, the example shown in Fig. 15 reveals that, among the 14th that is just before the present day and the days before the 14th, the used energy amount on the 2nd, 3rd, 8th, 9th, 10th, and 13th had exceeded the reference value and that the used energy amount on the other days had not exceeded the reference value. Moreover, when the 16th arrives, the 15th that is the present day is to be displayed in the first color if the used energy amount is higher than the reference value and in the second color if the used energy amount is equal to or lower than the reference value.

In addition, the reference value is a target value of a used energy amount per day.

As described above, the used amount confirmation screen 1500 is provided with the calendar data display field 1503 that displays both information indicating whether or not a used energy amount on each day has exceeded a reference value and schedules of the user. Therefore, the user can determine a reason why the used energy amount on a given day had exceeded the reference value or had not exceeded the reference value in consideration of a plan on that day. For example, the user can make a determination that the used energy amount of a given day had exceeded the prescribed reference value because the user spent the whole day at home. In addition, the user can make a determination that the used energy amount of a given day had not exceeded the prescribed reference value because the user went on a trip and was not home.

Furthermore, in the calendar data display field 1503, a minimum use day symbol 1505 is displayed in the box 1504 corresponding to a day on which the used energy amount is lowest among the present month (November in the example shown in Fig. 15). In this case, as the minimum use day symbol 1505, for example, a star-shaped graphic is adopted. However, this is merely an example and a square or triangular graphic, or other graphics may instead be adopted as the minimum use day symbol 1505. In the example shown in Fig. 15, since the used energy amount is lowest on the 4th, the minimum use day symbol 1505 is displayed in the box 1504 of the 4th. Accordingly, the user can instantaneously confirm the day on which the used energy amount is lowest.

In addition, in the calendar data display field 1503, a maximum use day symbol 1506 is displayed in the box 1504 corresponding to a day on which the used energy amount is highest among the present month. In this case, as the maximum use day symbol 1506, for example, a circular graphic is adopted. However, this is merely an example and any graphic may be adopted as the minimum use day symbol 1505 as long as the graphic can be distinguished from the minimum use day symbol 1505. In the example shown in Fig. 15, since the used energy amount is highest on the 8th, the maximum use day symbol 1506 is displayed in the box 1504 of the 8th. Accordingly, the user can instantaneously confirm the day on which the used energy amount is highest. In addition, in the example shown in Fig. 15, a schedule icon 1507 of "party" is also displayed in the box 1504 of the 8th. Therefore, the user can realize that the used energy amount had increased on the 8th because there was a party.

An advice display field 1511 is displayed below the calendar data display field 1503. A text reading "This month's energy can be used for another 17 days if the daily used amount stays equal to or below the reference value. You can keep the monthly total use amount within the target value by limiting use to another 17 days" is displayed in the advice display field 1511. "17 days" is the number of guideline days 1508 which indicates the number of days including and after the present day in the present month for which a used energy amount on each day must be equal to or below the reference value in order to make a used energy amount of the present month to be equal to or lower than a monthly target value of the used energy amount of the present month. Specifically, the number of guideline days 1508 is the number of days obtained by dividing a difference between a total value of used energy amounts of the present month up to the previous day and the monthly target value of the present month by the reference value.

In addition, following the text described above, a text reading "Since this month has 16 days left, you have a margin of 1 day" is displayed in the advice display field 1511. This "1 day" is the number of spare days 1509 obtained by subtracting the remaining number of days of the present month from the number of guideline days. Therefore, it is obvious that the larger the number of spare days 1509, the larger the margin contained in the used energy amount of the present month with respect to the monthly target value.

On the used amount confirmation screen 1500, a previous month display button 1501 with the description "previous month" is displayed to the left of the title. The previous month display button 1501 is a button for switching the display screen of the display section 108 to the used amount confirmation screen 1500 of the previous month. The used amount confirmation screen 1500 of the previous month is also provided with the calendar data display field 1503 in a similar manner to the used amount confirmation screen 1500 of the present month. Therefore, the user can confirm a used energy amount of the previous month.

In addition, on the used amount confirmation screen 1500, a next month display button 1502 with the description "next month" is displayed to the right of the title. The next month display button 1502 is a button for switching the display screen of the display section 108 to the used amount confirmation screen 1500 of the next month. The used amount confirmation screen 1500 of the next month is also provided with the calendar data display field 1503 in a similar manner to the used amount confirmation screen 1500 of the present month. The user can input plans for next month using the used amount confirmation screen 1500 of the next month.

Moreover, while calendar data is displayed on a monthly basis in the calendar data display field 1503 in Fig. 15, the calendar data may instead be displayed on a per week basis. In this case, the calendar data display field 1503 is constituted by, for example, 7 boxes 1504 divided in a matrix pattern by the seven days of the week from Sunday to Saturday which are arranged horizontally and one week arranged vertically.

In this case, days are displayed in the calendar data display field 1503 on a per week basis regardless of month even if the present week that is a display target is a week that extends to the following month or the previous month. For example, in Fig. 15, the week in the first row is a week that extends from October to November, and when only this week is displayed in the calendar data display field 1503, a numeral indicating the date and the schedule icon 1507 are also displayed for days which belong to October and which are blank fields. In addition, among the week, boxes 1504 of days on which the used energy amount is higher than the reference value are displayed in the first color and boxes 1504 of days on which the used energy amount is equal to or lower than the reference value are displayed in the second color.

Furthermore, when the calendar data display field 1503 on a weekly basis is adopted, the minimum use date symbol 1505 and the maximum use date symbol 1506 are also calculated and displayed on a per week basis. In addition, the number of guideline days 1508, the number of spare days 1509, and the number of days short 1510 (to be described later) of the advice display field are also calculated and displayed on a per week basis.

Moreover, for example, the user can input a plan to the calendar data display field 1503 as follows. First, the user taps the box 1504 corresponding to a desired day of the calendar data display field 1503. In response thereof, the screen generating section 101 displays a screen for inputting details of the plan. Subsequently, the screen generating section 101 notifies information inputted to the screen to the calendar data managing sections 106 and 601. Accordingly, the plan inputted by the user through the calendar data display field 1503 is registered to the calendar plan list 2600.

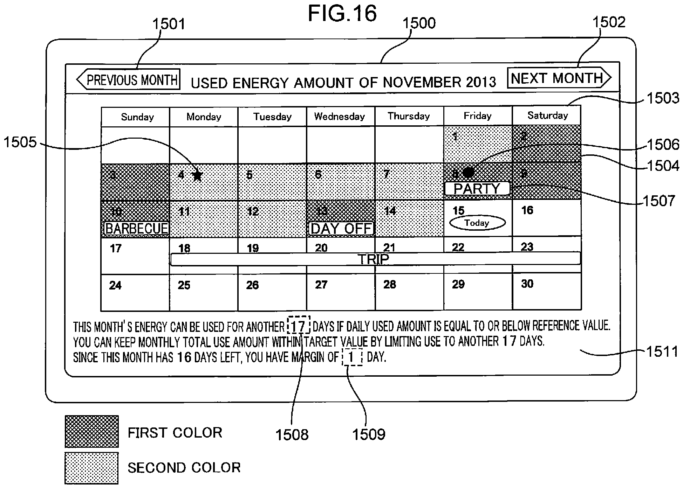

Fig. 16 is a diagram showing a second example of the used amount confirmation screen 1500. The used amount confirmation screen 1500 according to the second example differs from that of the first example in a display content of the advice display field 1511. In the first example, while the advice display field 1511 in the first example describes that "You can keep the monthly total use amount within the target value by limiting use to another 17 days", the advice display field 1511 in the second example describes that "You can keep the monthly average use amount within the target value by limiting use to another 17 days". In other words, in the first example, a total value of the used energy amount of the present month is adopted as a monthly target value and a presence or absence of a margin of a total value of the used energy amount up to the previous day with respect to the monthly target value is shown. On the other hand, in the second example, an average used energy amount of the present month is adopted as a monthly target value and a presence or absence of a margin of an average used energy amount up to the previous day with respect to the monthly target value is shown. Otherwise, the second example is the same as the first example.

In this case, the average used energy amount up to the previous day is obtained by dividing a total value of the used energy amount of the present month up to the previous day by the number of days in the present month up to the previous day. In addition, as a monthly target value of the average used energy amount, for example, a value obtained by dividing the monthly target value of the total value of the used energy amount of the present month by the number of days in the present month can be adopted. At this point, if the monthly target value of the total value of the used energy amount of the present month is a value obtained by multiplying the reference value by the number of days in the present month, the monthly target value of the average used energy amount is equivalent to the reference value.

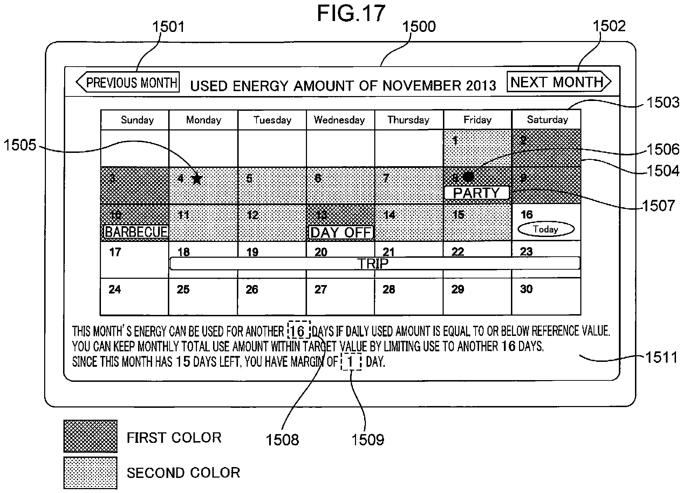

Fig. 17 is a diagram showing a different display example of the used amount confirmation screen 1500 according to the first example. On the used amount confirmation screen 1500 shown in Fig. 17, since the number of guideline days 1508 is calculated as "16 days" and the remaining number of days in the present month is "15 days", the number of spare days 1509 is calculated as "1 day". Therefore, in the example shown in Fig. 17, a text to be illustrated is displayed in the advice display field 1511 in accordance with the example shown in Fig. 15.

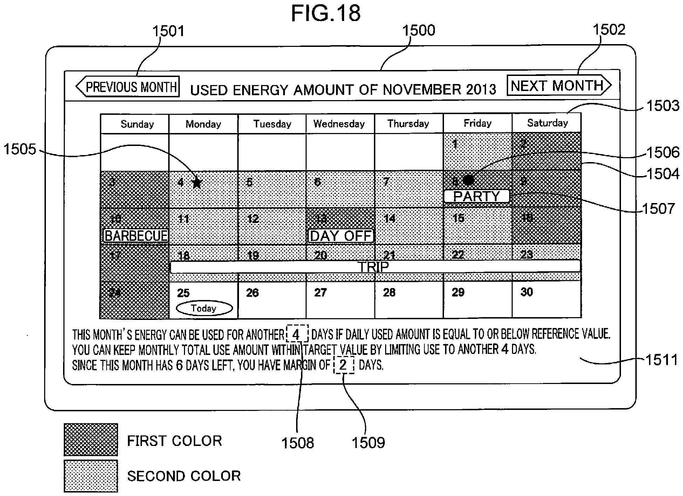

Fig. 18 is a diagram showing the used amount confirmation screen 1500 according to the first example when the number of guideline days 1508 is smaller than the remaining number of days in the present month. In the example shown in Fig. 18, the number of guideline days is calculated as "4 days". Therefore, "4 days" is displayed as the number of guideline days 1508 in the advice display field 1511. In addition, since the remaining number of days in the present month is "6 days" and the remaining number of days is 2 days more than the number of guideline days, "Since this month has 6 remaining days, you are 2 days short" is displayed in the advice display field 1511. This "2 days" is the number of days short 1510 obtained by subtracting the number of guideline days from the remaining number of days. Therefore, it is obvious that the greater the number of days short 1510, the greater a degree of shortage of the total value of the used energy amount of the present month with respect to the monthly target value. In this manner, according to the example shown in Fig. 18, the user can be notified using the number of days short 1510 to cut down on the used energy amount of the present month.

Moreover, when displaying the number of days short 1510, an advice regarding an average use amount may also be displayed in accordance with the example shown in Fig. 17.

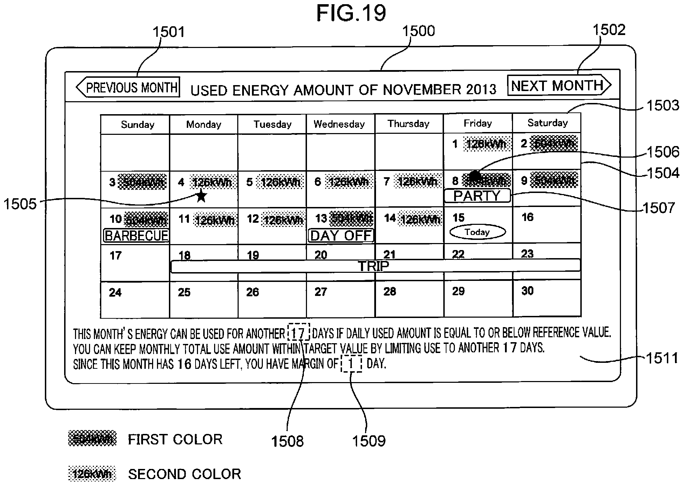

Fig. 19 is a diagram showing a third example of the used amount confirmation screen 1500. On the used amount confirmation screen 1500 according to the third example, a used energy amount of each day is displayed by characters colored in the first color or the second color instead of displaying the entire box 1504 in the first color or the second color. Otherwise, the third example is the same as the first example.

For example, since the used energy amount on the 14th is 126 kWh, "126 kWh" is displayed in the box 1504 of the 14th. In addition, since 126 kWh is equal to or below the reference value, "126 kWh" is displayed in the box 1504 of the 14th with its background highlighted in the second color.

In addition, for example, since the used energy amount on the 10th is 504 kWh, "504 kWh" is displayed in the box 1504 of the 10th. In addition, since 504 kWh is higher than the reference value, "504 kWh" is displayed in the box 1504 of the 10th with its background highlighted in the first color.

In this manner, since characters indicating a used energy amount on each day is displayed on the used amount confirmation screen 1500 according to the third example, the user can recognize the used energy amount on each day in a concrete manner. In addition, in the third example, the background of the characters indicating an used energy amount is highlighted in the first color or the second color. Accordingly, even a user who is not an expert can readily realize the implication that the used energy amount is high or low.

Moreover, while a mode in which a background of characters indicating a used energy amount is highlighted is shown in Fig. 19, a mode in which colors of the characters indicating a used energy amount themselves are displayed in the first color or the second color may be adopted instead.

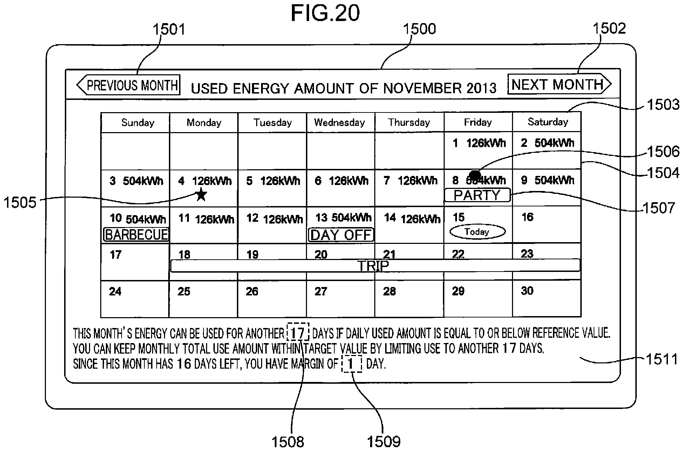

Fig. 20 is a diagram showing a fourth example of the used amount confirmation screen 1500. On the used amount confirmation screen 1500 according to the fourth example, characters indicating a used energy amount on each day are displayed. In addition, in the fourth example, the background of the characters indicating a used energy amount is not highlighted in the first color or the second color. Otherwise, the fourth example is the same as the third example. In this case, numerals indicating a used energy amount may be displayed in a same color regardless of whether or not the used energy amount is higher than the reference value or may be displayed in the first color when the used energy amount is higher than the reference value and displayed in the second color when the used energy amount is equal to or lower than the reference value.

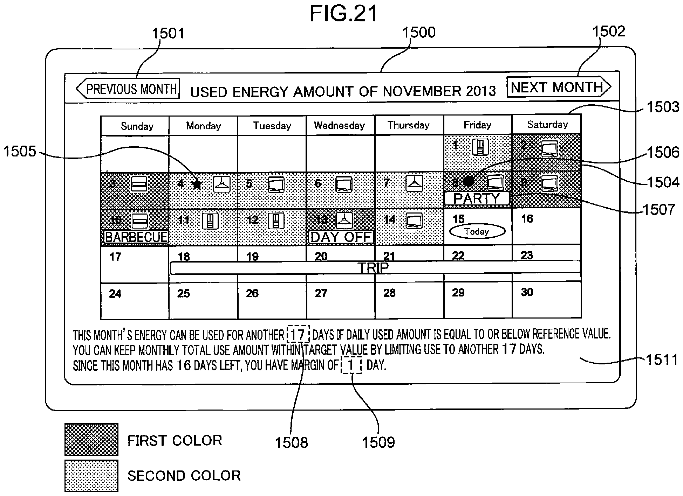

Fig. 21 is a diagram showing a fifth example of the used amount confirmation screen 1500. On the used amount confirmation screen 1500 according to the fifth example, the box 1504 on each day is displayed in the first color or the second color and a device icon 1512 indicating a device 400 whose used energy amount is largest on each day is displayed in the box 1504 on each day. Otherwise, the fifth example is the same as the first example.

For example, since a used energy amount of a television set is largest among the devices 400 installed in the house on the 14th, the device icon 1512 of a television set is displayed in the box 1504 of the 14th.

In addition, for example, since a used energy amount of an air conditioner is largest on the 10th, the device icon 1512 of an air conditioner is displayed in the box 1504 of the 10th.

In this manner, since the device icon 1512 is displayed on the used amount confirmation screen 1500 according to the fifth example, the user can be made aware of the device 400 whose used energy amount is largest on each day.

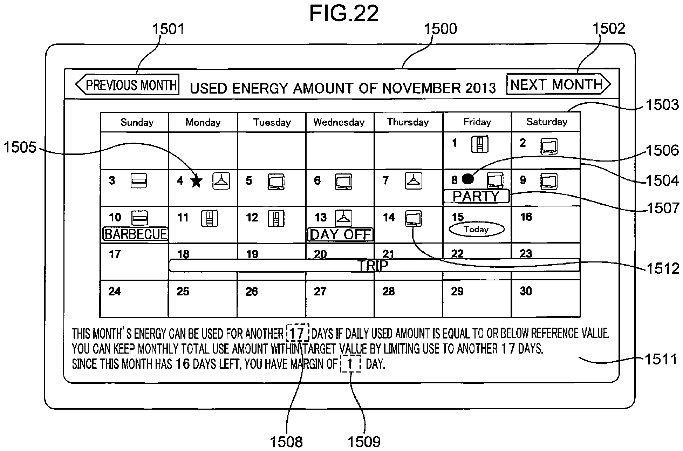

Fig. 22 is a diagram showing a sixth example of the used amount confirmation screen 1500. On the used amount confirmation screen 1500 according to the sixth example, a device icon 1512 indicating a device 400 whose used energy amount is largest on each day is displayed in the first color or the second color instead of displaying the box 1504 on each day in the first color or the second color. Otherwise, the sixth example is the same as the fifth example.

For example, since the used energy amount on the 14th is equal to or lower than the reference value, the device icon 1512 is displayed in the second color. In this case, among the device icon 1512, for example, a drawing line indicating a contour or the like of an image indicating the device 400 is displayed in the second color and, at the same time, a background of the image indicating the device 400 is displayed in the second color.

In addition, for example, since the used energy amount on the 10th is higher than the reference value, the device icon 1512 is displayed in the first color. In this case, among the device icon 1512, for example, a drawing line indicating a contour or the like of an image indicating the device 400 is displayed in the first color and, at the same time, a background of the image indicating the device 400 is displayed in the first color.

In this manner, since the device icon 1512 is displayed in the first color or the second color on the used amount confirmation screen 1500 according to the sixth example, the user can recognize whether or not the used energy amount on each day has exceeded the reference value based on the color of the device icon 1512. In addition, the user can recognize the device 400 with the highest used energy amount on each day based on the device icon 1512.

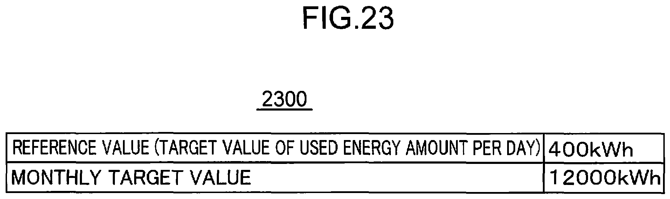

Fig. 23 is a diagram showing an example of a data configuration of a reference value table 2300. The reference value table 2300 includes a "reference value" and a "monthly target value". In this case, the reference value is a target value of a used energy amount of one day. In the example shown in Fig. 23, 400 kWh is registered as a reference value.

In this case, as the reference value, a value determined in advance by the management system may be adopted, a value arbitrarily set by the user may be adopted, or a household average value may be adopted. As the household average value, for example, an average value of a used energy amount per day of a country or an area belonging to the country (for example, a prefecture, a state, a county, a region, a city, a town, and a village) can be adopted. In addition, if the monthly target value is already determined, a value obtained by dividing the monthly target value by the number of days in each month may be adopted as the reference value. In this case, if the monthly target value is fixed, since the number of days in each month varies from month to month, the reference value also varies from month to month.

The monthly target value is a target value of a total value of the used energy amount during one month. In the example shown in Fig. 24, 1200 kWh is registered as the monthly target value. 1200 kWh is a value obtained by simply multiplying the reference value 400 kWh by 30 which is the number of days in one month.

In this case, as the monthly target value, a value determined in advance by the management system may be adopted, a value arbitrarily set by the user may be adopted, or a household average value may be adopted. As the household average value, for example, an average value of a used energy amount per month of a country or an area belonging to the country (for example, a prefecture, a state, a county, a region, a city, a town, and a village) can adopted. In addition, if the reference value is already determined, a value obtained by multiplying the reference value by the number of days in each month may be adopted as the monthly target value. In this case, if the reference value is fixed, since the number of days in each month varies from month to month, the monthly target value also varies from month to month.

Moreover, the reference value table 2300 is stored in, for example, a storing section of a device that calculates the energy display data 2500.

Fig. 24 is a diagram showing an example of a data configuration of energy management data 2400. The energy management data 2400 is data to which energy data indicating a used energy amount of each user (house) is registered.

In this case, energy data is periodically generated by the energy measuring unit 200 and registered to the energy management data 2400. When a management system does not include the energy management server 500, the energy management data 2400 is managed by the energy measuring unit 200. In addition, with the energy management data 2400, when a management system includes the energy management server 500, energy data of all of the users is managed by the energy management server 500 in a unified manner and energy data corresponding to users (houses) of concern is managed by the energy measuring unit 200.

Therefore, energy data of a plurality of users is registered to the energy management data 2400 that is managed by the energy management server 500.

The energy management data 2400 includes a "user ID", a "data ID", a "date and time", and a "used energy amount".

A "user ID" is an identifier of a user set in advance by the user before registering as a user with the management system. A "data ID" is an identifier that is attached to one piece of energy data. A "date and time" represents the date and time of measurement of the energy data. In the example shown in Fig. 24, as energy data is measured every hour for a user "A", while the "date and time" of a first piece of energy data is described as "date and time (10:00, 1 November 2013)", the "date and time" of a second piece of energy data is one hour later (11:00, 1 November 2013)".

A "used energy amount" includes a "total" and a "breakdown". The "total" represents a total value of the used energy amounts of respective devices 400 shown in the "breakdown". The "breakdown" indicates a used energy amount of each device 400 and includes an "installation location/device name" and a "per device total". The "installation location/device name" indicates an installation location and a name of each device 400. The "per device total" indicates a used energy amount of each device 400. The used energy amount of each device 400 is calculated by having the energy measuring unit 200 acquire a current value that is sensed by a current sensor provided in a branch circuit of the distribution panel 300 that supplies power to the concerned device 400.

For example, in the energy data with the data ID "0001", since "living room/air conditioner" is registered to the "installation location/device name" and "10 kWh" is registered to the "per device total", it is obvious that an air conditioner is installed in the living room and the used energy amount is 10 kWh at the "date and time (10:00, 1 November 2013)" of concern.

Fig. 25 is a diagram showing an example of a data configuration of energy display data 2500. The energy display data 2500 is used when creating the used amount confirmation screen 1500 and is data in which one record is allocated to one day. The energy display data 2500 includes a "date", a "used energy amount", a "comparison with reference value", and a "most used device". Moreover, in Fig. 25, the energy display data 2500 of a given single user is shown. In other words, the energy display data 2500 is created per user.

A "date" indicates the date on which a used energy amount had been measured. A "used energy amount" indicates a used energy amount as of a concerned day. The "used energy amount" is obtained by adding a used energy amount registered to "total" in the energy data corresponding to one day of a given user registered to the energy management data 2400.

A "comparison with reference value" indicates whether or not the used energy amount of a concerned day exceeds the reference value. In this case, "higher" is registered to the "comparison with reference value" if the used energy amount is higher than the reference value and "lower" is registered if the used energy amount is equal to or lower than the reference value.

A "most used device" indicates a device 400 whose used energy amount is largest on the concerned day. For the "most used device", the used energy amount registered to "per device total" is added for each device 400 among the energy data corresponding to one day of a given user registered to the energy management data 2400, whereby the device 400 with a largest value is registered to the "most used device".

Registered in a record in a first row in Fig. 25 is the fact that a used energy amount of a given user on November 1, 2013 is "126 kWh", the used energy amount is equal to or less than the reference value, and the device 400 whose used energy amount is largest on the day is a refrigerator in a kitchen.

Fig. 26 is a diagram showing an example of a data configuration of the calendar plan list 2600. The calendar plan list 2600 (an example of schedule information) is data to which schedules inputted by the user using a management application or a calendar application are registered. The calendar plan list 2600 is used when creating the calendar data display field 1503. Moreover, the calendar plan list 2600 is shared by the management application and the calendar application. In addition, the calendar plan list 2600 is provided for each user.

Specifically, the calendar plan list 2600 is data in which one or more records are allocated to one plan and to which a "date", a "time", and a "plan content" are registered. A "date" indicates a date on which a concerned plan is to be executed. "Time" indicates the time at which a concerned plan is to be executed. A "plan content" indicates a content of a concerned plan.

For example, a plan for a "party" to be held between 13:00 and 18:00 on November 8, 2013 is registered in the record in the first row. Moreover, since the plan of the "party" ends on the same day, one record is allocated to the plan.

On the other hand, while a plan of a "trip" registered to the fourth to ninth rows is one plan, since the plan extends over six days, six records are allocated thereto.

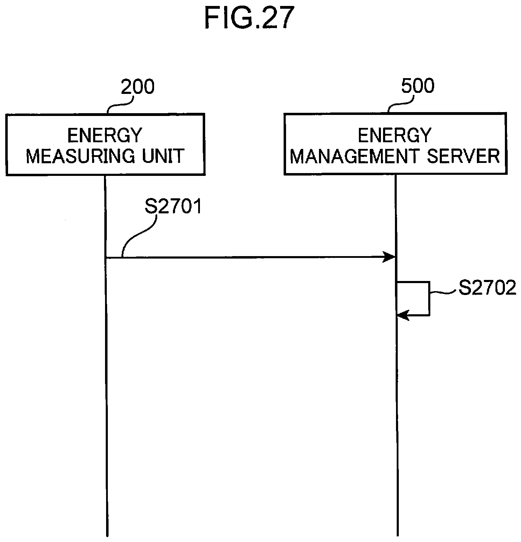

Fig. 27 is a sequence diagram showing a collection process of energy data. Moreover, the collection process is performed by the configurations shown in Figs. 2 and 4 in which the management system includes the energy management server 500.

The energy data managing section 201 of the energy measuring unit 200 generates energy data using the used energy amount measured by the used energy amount measuring section 203 and transmits the energy data to the energy management server 500 using the communicating section 204 (S2701).

The energy data managing section 501 of the energy management server 500 receives the energy data using the communicating section 503 and stores the energy data in the storing section 502 (S2702).

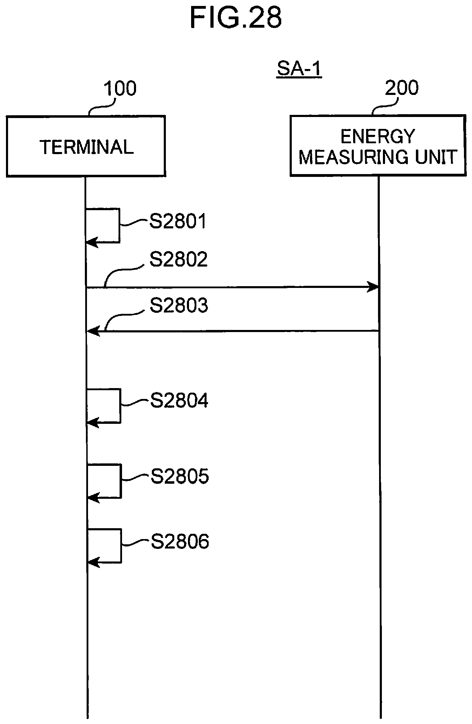

Fig. 28 is a sequence diagram showing a process sequence SA-1 of the management system. The process sequence SA-1 is a process sequence of the management system with the configuration pattern A-1 (Fig. 5). In the process sequence SA-1, the terminal 100 characteristically generates the energy display data 2500.

The application managing section 103 of the terminal 100 starts the management application (S2801). In this case, the application managing section 103 starts the management application with tapping of the management application icon 1401 acting as a trigger.

The energy display data generating section 105 of the terminal 100 uses the communicating section 107 to transmit an energy data request for acquiring energy data to the energy measuring unit 200 (S2802).

The energy data managing section 201 of the energy measuring unit 200 acquires energy data from the storing section 202 and transmits the energy data to the terminal 100 using the communicating section 204 (S2803). In this case, the energy data managing section 201 may extract energy data of a prescribed period (for example, one month or one week) from the previous day to the past from the energy management data 2400 and transmit the energy data to the terminal 100.

The energy display data generating section 105 generates the energy display data 2500 using the transmitted energy data (S2804). In this case, the energy display data generating section 105 may generate records for the number days for which the energy display data 2500 is not calculated, calculate a "used energy amount", a "comparison with reference value", and a "most used device" using the transmitted energy data for each of the generated records, and register the same in the generated records.

While the energy display data generating section 105 sets the number days for which the energy display data 2500 is not calculated as a calculation object in this case, the energy display data 2500 may be calculated for each day regardless of whether or not the management application has been started. In this case, in S2803, the energy data managing section 201 may extract energy data corresponding to one day from the energy management data 2400 and transmit the energy data to the terminal 100.

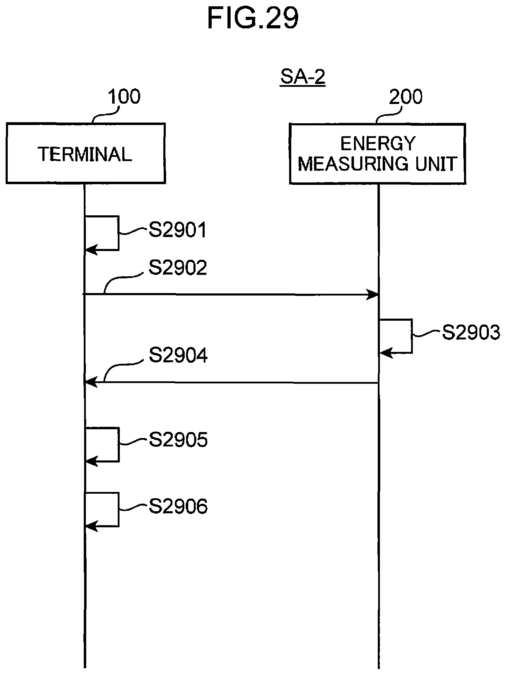

In addition, in S2804, the energy display data generating section 105 may generate the energy display data 2500 corresponding to one day using the transmitted energy data corresponding to one day. In this case, the process sequence SA-1 shown in Fig. 28 may be executed at a timing where, for example, the present day changes to the following day. This also applies to the process sequences shown in Figs. 29 to 36 described below.

The energy display data generating section 105 acquires the calendar plan list 2600 from the storing section 104 (S2805).

Using the acquired calendar plan list 2600 and the energy display data 2500, the screen generating section 101 generates calendar data that presents plans of the user and used energy amounts in a calendar format and displays the calendar data on the display section 108 (S2806). Accordingly, the used amount confirmation screen 1500 such as that shown in Fig. 15 is displayed on the display section 108.

Fig. 29 is a sequence diagram showing a process sequence SA-2 of the management system. The process sequence SA-2 is a process sequence of the management system with the configuration pattern A-2 (Fig. 6). In the process sequence SA-2, the energy measuring unit 200 characteristically generates the energy display data 2500.

S2901 is the same as S2801.

The screen generating section 101 of the terminal 100 uses the communicating section 107 to transmit an energy display data request for causing the energy measuring unit 200 to generate the energy display data 2500 to the energy measuring unit 200 (S2902).

The energy display data generating section 205 of the energy measuring unit 200 acquires energy data from the storing section 202 and generates the energy display data 2500 (S2903). Details of this process are the same as S2804.

The energy display data generating section 205 transmits the energy display data 2500 to the terminal 100 using the communicating section 204 (S2904).

S2905 and S2906 are the same as S2805 and S2806.

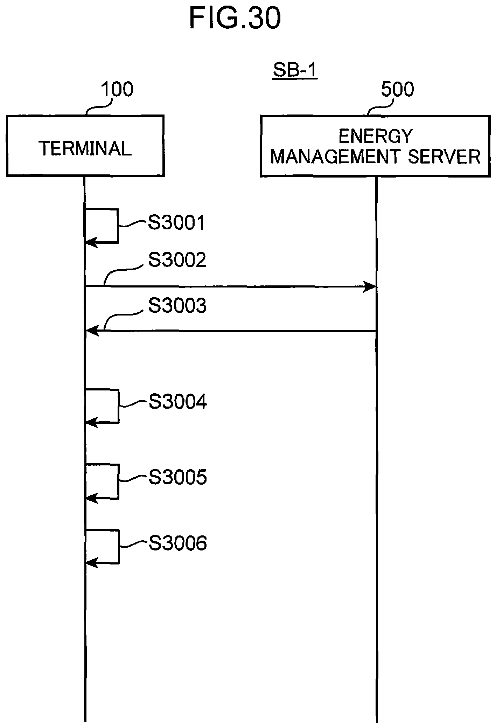

Fig. 30 is a sequence diagram showing a process sequence SB-1 of the management system. The process sequence SB-1 is a process sequence of the management system with the configuration pattern B-1 (Fig. 7). In the process sequence SB-1, the terminal 100 characteristically acquires energy data from the energy management server 500 and generates the energy display data 2500.

S3001 is the same as S2801.

The energy display data generating section 105 of the terminal 100 uses the communicating section 107 to transmit an energy data request for acquiring energy data to the energy measuring unit 200 (S3002).

The energy data managing section 501 of the energy management server 500 acquires energy data from the storing section 502 and transmits the energy data to the terminal 100 using the communicating section 107 (S3003). In this case, the energy data managing section 501 may extract energy data of a prescribed period (for example, one month) from the previous day to the past of the user who owns the concerned terminal 100 from the energy management data 2400 and transmit the energy data to the terminal 100.

S3004 to S3006 are the same as S2804 to S2806.

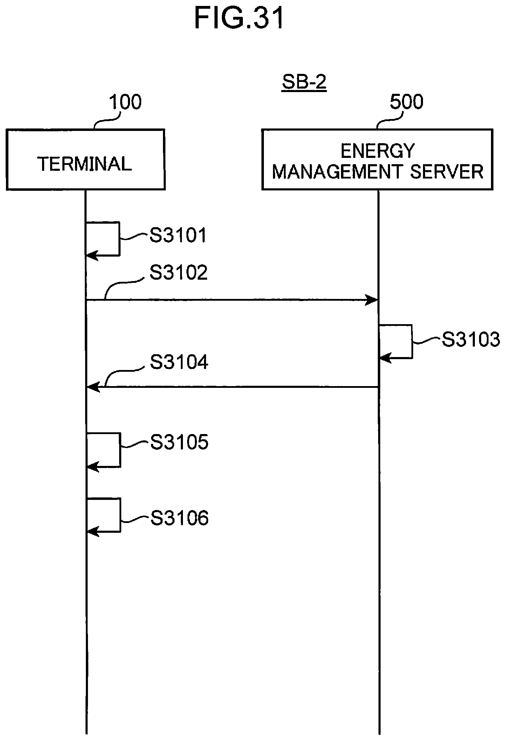

Fig. 31 is a sequence diagram showing a process sequence SB-2 of the management system. The process sequence SB-2 is a process sequence of the management system with the configuration pattern B-2 (Fig. 8). In the process sequence SB-2, the energy management server 500 characteristically generates the energy display data 2500.

S3101 is the same as S2801.

The screen generating section 101 of the terminal 100 uses the communicating section 107 to transmit an energy display data request for causing the energy management server 500 to generate the energy display data 2500 to the energy management server 500 (S3102).

The energy display data generating section 504 of the energy management server 500 acquires energy data from the storing section 502 and generates the energy display data 2500 (S3103). Details of this process are the same as S2804.

The energy management server 500 transmits the energy display data 2500 to the terminal 100 using the communicating section 503 (S3104).

S3105 and S3106 are the same as S2805 and S2806.

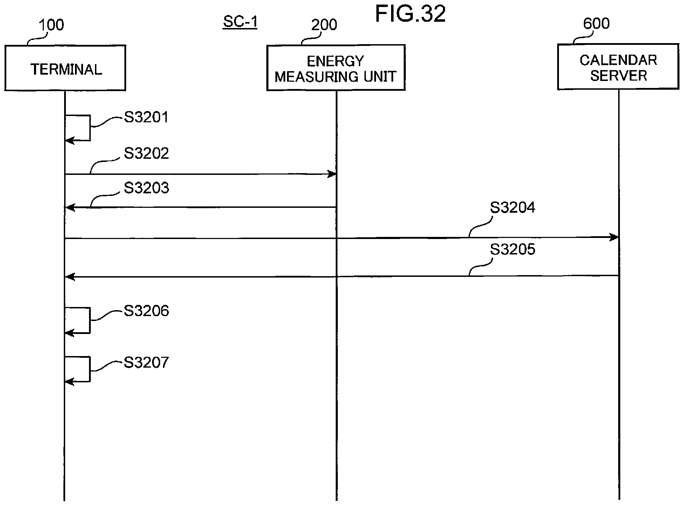

Fig. 32 is a sequence diagram showing a process sequence SC-1 of the management system. The process sequence SC-1 is a process sequence of the management system with the configuration pattern C-1 (Fig. 9). In the process sequence SC-1, the terminal 100 characteristically generates the energy display data 2500 and acquires the calendar plan list 2600 from the calendar server 600.

S3201 is the same as S2801.

S3202 and S3203 are the same as S2802 and S2803.

The energy display data generating section 105 of the terminal 100 uses the communicating section 107 to transmit a request for acquiring the calendar plan list 2600 to the calendar server 600 (S3204).

The calendar data managing section 601 of the calendar server 600 acquires the calendar plan list 2600 of the user who owns the concerned terminal 100 from the storing section 602 and transmits the calendar plan list 2600 to the terminal 100 using the communicating section 603 (S3205). In this case, in a mode where the energy display data 2500 is created for each day, the calendar data managing section 601 may transmit the energy display data 2500 corresponding to one day that is a calculation object to the terminal 100. In addition, in a mode where the energy display data 2500 is created when the management application is started by the user, the calendar data managing section 601 may transmit the energy display data 2500 corresponding to the number of uncalculated days to the terminal 100.

S3206 and S3207 are the same as S2804 and S2806.

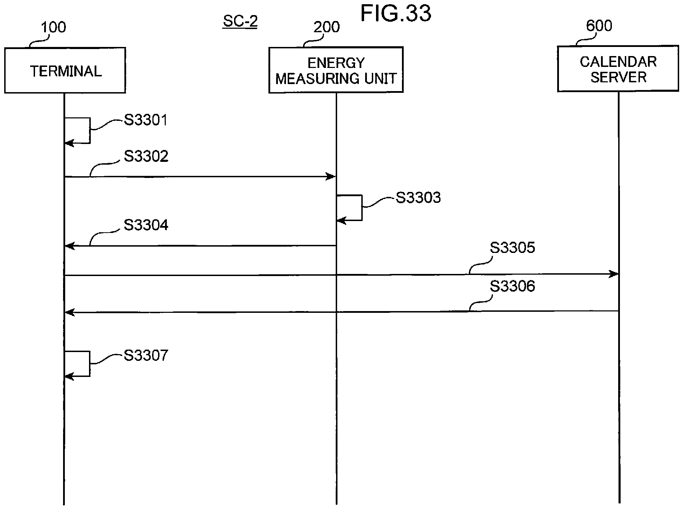

Fig. 33 is a sequence diagram showing a process sequence SC-2 of the management system. The process sequence SC-2 is a process sequence of the management system with the configuration pattern C-2 (Fig. 10). In the process sequence SC-2, the energy measuring unit 200 characteristically generates the energy display data 2500 and the terminal 100 acquires the calendar plan list 2600 from the calendar server 600.

S3301 is the same as S2801.

S3302 to S3304 are the same as S2902 to S2904.

S3305 and S3306 are the same as S3204 and S3205.

S3307 is the same as S2806.

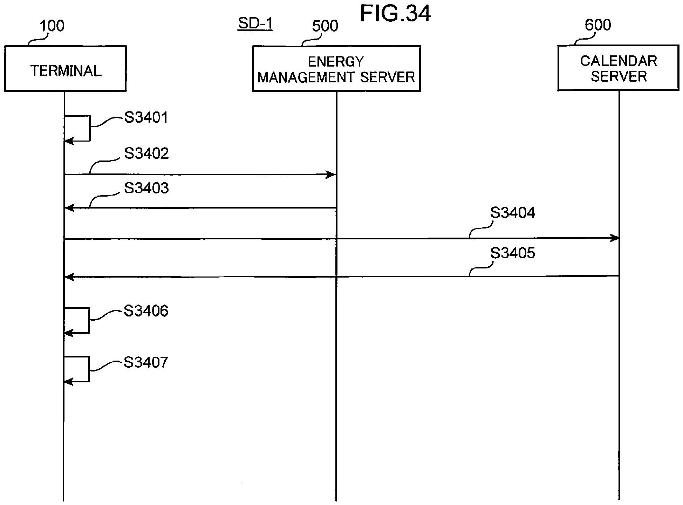

Fig. 34 is a sequence diagram showing a process sequence SD-1 of the management system. The process sequence SD-1 is a process sequence of the management system with the configuration pattern D-1 (Fig. 11). In the process sequence SD-1, the terminal 100 characteristically acquires energy data from the energy management server 500 and generates the energy display data 2500, and the terminal 100 acquires the calendar plan list 2600 from the calendar server 600.

S3401 is the same as S2801.

S3402 and S3403 are the same as S3002 and S3003.

S3404 to S3407 are the same as S3204 to S3207.

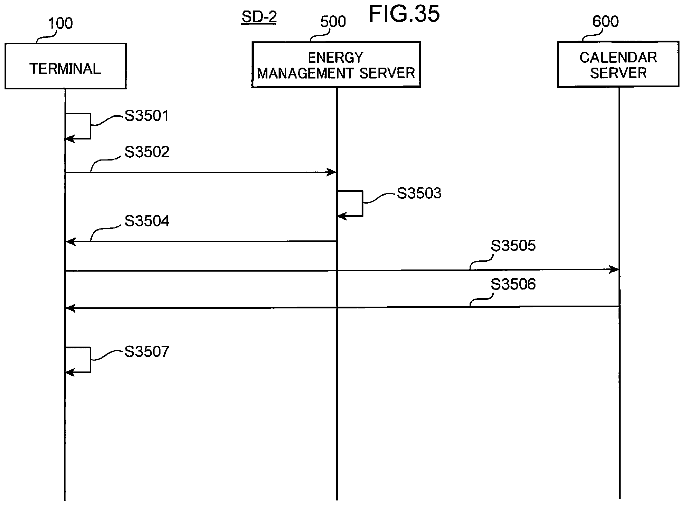

Fig. 35 is a sequence diagram showing a process sequence SD-2 of the management system. The process sequence SD-2 is a process sequence of the management system with the configuration pattern D-2 (Fig. 12). In the process sequence SD-2, the energy management server 500 characteristically generates the energy display data 2500 and the terminal 100 acquires the calendar plan list 2600 from the calendar server 600.

S3501 is the same as S2801.

S3502 to S3504 are the same as S3102 to S3104.

S3505 and S3506 are the same as S3204 and S3205.

S3507 is the same as S2806.

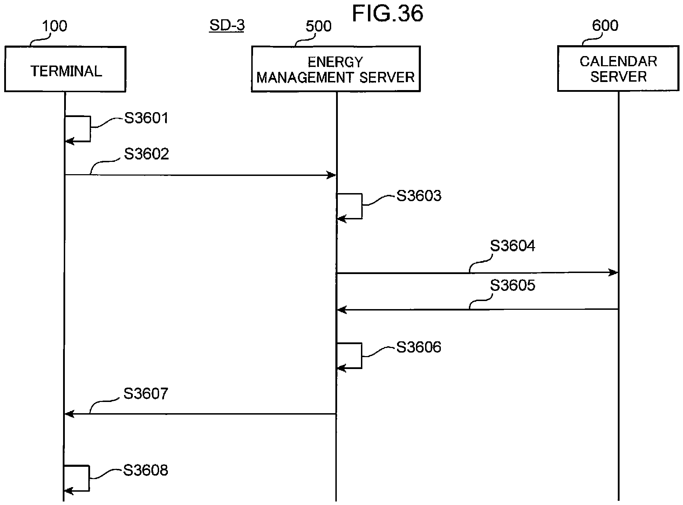

Fig. 36 is a sequence diagram showing a process sequence SD-3 of the management system. The process sequence SD-3 is a process sequence of the management system with the configuration pattern D-3 (Fig. 13). In the process sequence SD-3, the energy management server 500 characteristically acquires the calendar plan list 2600 from the calendar server 600 and generates drawing data of the used amount confirmation screen 1500.

S3601 is the same as S2801.

The screen generating section 101 of the terminal 100 uses the communicating section 107 to transmit a drawing data request for causing the energy management server 500 to generate drawing data of the used amount confirmation screen 1500 (3602).

S3603 is the same as S3103.

In S3604, the application drawing data generating section 505 of the energy management server 500 uses the communicating section 503 to transmit a request for acquiring the calendar plan list 2600 to the calendar server 600.

In S3605, the communicating section 503 of the energy management server 500 receives the calendar plan list 2600.

In S3606, the application drawing data generating section 505 of the energy management server 500 generates drawing data of the used amount confirmation screen 1500 using the energy display data 2500 and the calendar plan list 2600. In this case, the drawing data is data described in, for example, HTML.

The application drawing data generating section 505 transmits the drawing data to the terminal 100 using the communicating section 503 (S3607).

The screen generating section 101 of the terminal 100 uses the drawing data to display the used amount confirmation screen 1500 on the display section 109 (S3608).

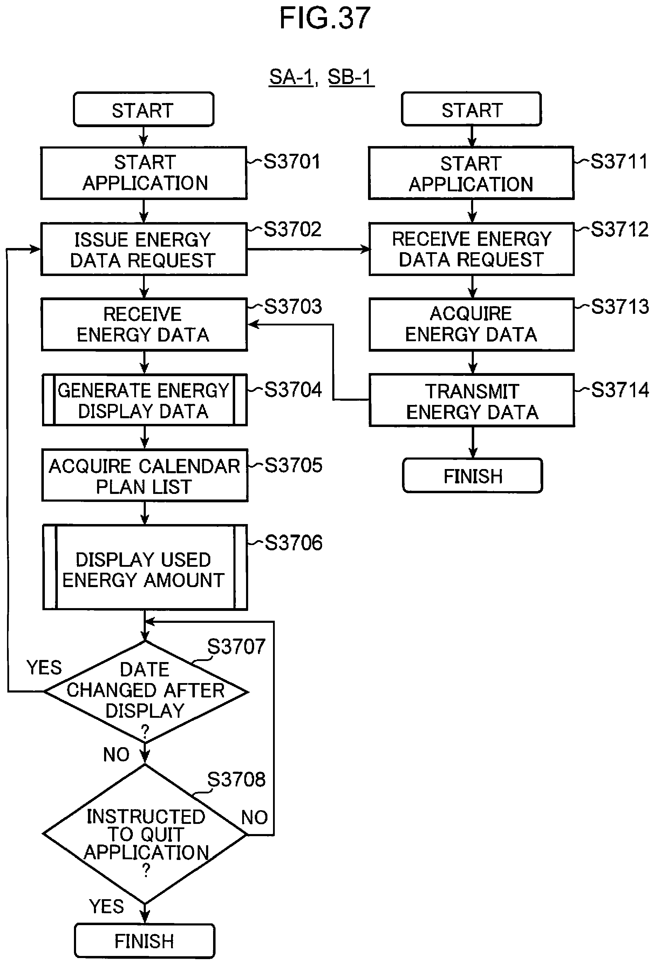

Fig. 37 is a flow chart of a first example of a display process of the used amount confirmation screen 1500. The flow chart corresponds to process sequences SA-1 and SB-1. Moreover, when the process sequence SA-1 is adopted, a processing entity in a right column is the energy measuring unit 200, and when the process sequence SB-1 is adopted, the processing entity in the right column is the energy management server 500.

First, the application managing section 103 starts the management application (S3701). The energy measuring unit 200 or the energy management server 500 also starts the management application (S3711).

Next, the energy display data generating section 105 transmits an energy data request to the energy measuring unit 200 or the energy management server 500.

Subsequently, the energy measuring unit 200 or the energy management server 500 receives the energy data request (S3712), acquires energy data from the energy management data 2400 managed by the energy measuring unit 200 or the energy management server 500 (S3713), and transmits the energy data to the terminal 100 (S3714).

Next, the communicating section 107 of the terminal 100 receives the energy data (S3703).

Subsequently, the energy display data generating section 105 executes a generation process of the energy display data 2500 (S3704). Details of this process will be described later.

Next, the screen generating section 101 acquires the calendar plan list 2600 from the storing section 104 (S3705).

Subsequently, the screen generating section 101 executes a display process of a used energy amount (S3706). Details of this process will be described later.

Next, the screen generating section 101 determines whether or not the date has changed after displaying the used energy amount (S3707). If the date has changed (YES in S3707), the process returns to S3702. If the date has not changed (NO in S3707), the screen generating section 101 determines whether or not an instruction to quit the management application has been issued (S3708). If an instruction to quit the management application has been issued (YES in S3708), the process is finished. On the other hand, if an instruction to quit the management application has not been issued, the process returns to S3707.

Accordingly, for example, if the date changes when the management application is running, the energy display data 2500 is automatically generated and the used energy amount displayed in the calendar data display field 1503 is updated. As a result, even if the date changes when the management application is running, the user can confirm a used energy amount on the day that had been the present day at the time of start of the management application without having to restart the management application.

Moreover, when a mode where the energy display data 2500 is created for each day is adopted, the terminal 100 may execute a generation process of the energy display data 2500 regardless of whether or not the management application is started by the user.

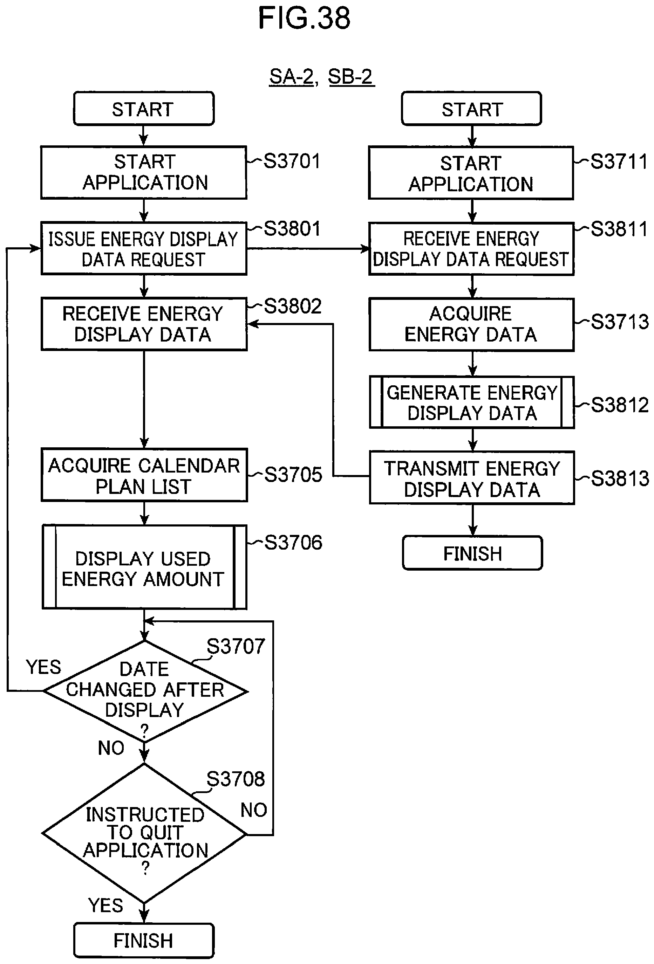

Fig. 38 is a flow chart of a second example of a display process of the used amount confirmation screen 1500. This flow chart corresponds to process sequences SA-2 and SB-2. Moreover, when the process sequence SA-2 is adopted, a processing entity in a right column is the energy measuring unit 200, and when the process sequence SB-2 is adopted, the processing entity in the right column is the energy management server 500.

The display process according to the second example differs from the display process according to the first example in that S3801 and S3801 are provided in place of S3702, S3703, and S3704, and processes of S3811, S3812, and S3813 are provided in places of the processes of S3712 and S3714.

In S3801, the screen generating section 101 transmits an energy display data request to the energy measuring unit 200 or the energy management server 500 (S3801).

The energy measuring unit 200 or the energy management server 500 receives the energy display data request (S3811).

In S3812, the energy measuring unit 200 or the energy management server 500 executes a generation process of the energy display data 2500 (S3812). Details of this process will be described later.

In S3812, the energy measuring unit 200 or the energy management server 500 transmits the energy display data 2500 to the terminal 100 (S3813).

In S33802, the communicating section 107 of the terminal 100 receives the energy display data 2500. The display process is subsequently the same as the display process according to the first example.

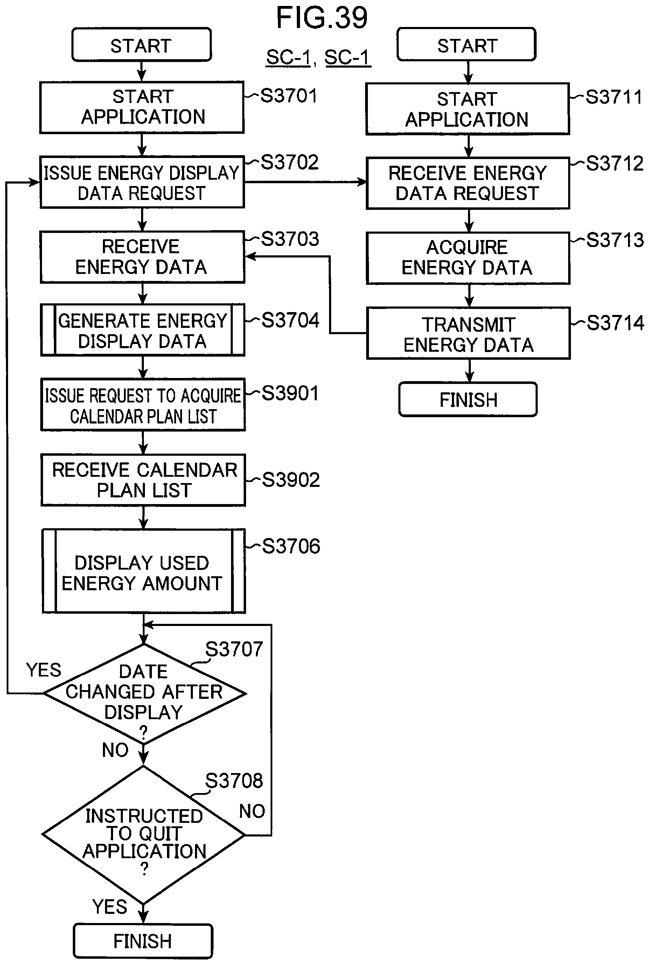

Fig. 39 is a flow chart of a third example of a display process of the used amount confirmation screen 1500. The flow chart corresponds to process sequences SC-1 and SD-1. Moreover, when the process sequence SC-1 is adopted, a processing entity in a right column is the energy measuring unit 200, and when the process sequence SD-1 is adopted, the processing entity in the right column is the energy management server 500.

The display process according to the third example differs from the display process according to the first example (Fig. 37) in that S3901 and S3902 described with reference to Fig. 39 are provided in place of S3705.

In S3901, the screen generating section 101 of the terminal 100 transmits a request to acquire the calendar plan list 2600 to the calendar server 600 (S3901) and receives the calendar plan list 2600 (S3902). The display process is subsequently the same as the display process according to the first example.

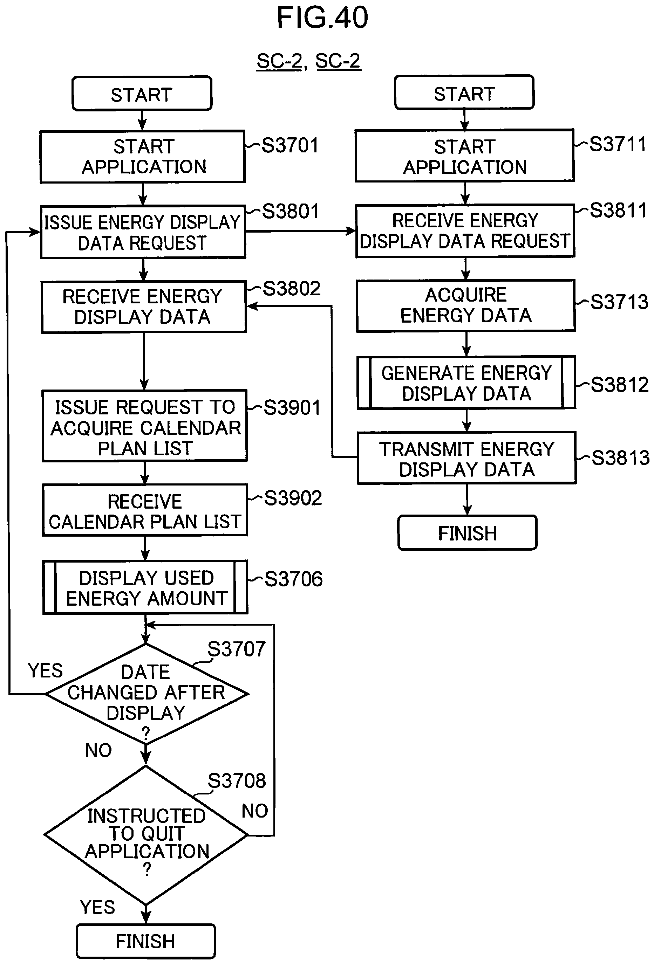

Fig. 40 is a flow chart of a fourth example of a display process of the used amount confirmation screen 1500. The flow chart corresponds to process sequences SC-2 and SD-2. Moreover, when the process sequence SC-2 is adopted, a processing entity in a right column is the energy measuring unit 200, and when the process sequence SD-2 is adopted, the processing entity in the right column is the energy management server 500.

The display process according to the fourth example differs from the display process according to the second example (Fig. 38) in that S3901 and S3902 described with reference to Fig. 39 are provided in place of S3705. This is because the calendar server 600 is provided in the fourth example. Otherwise, the display process is the same as the display process according to the second example.

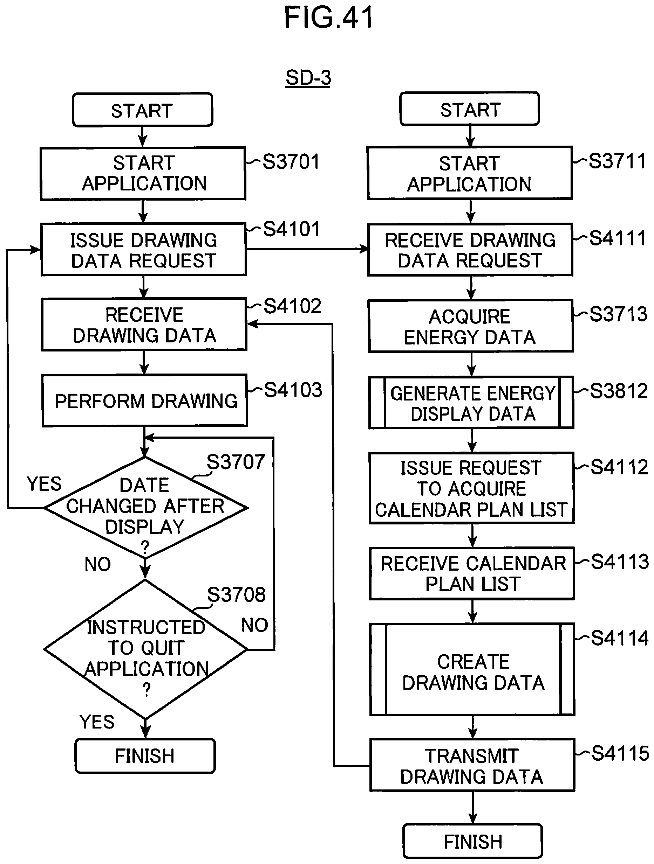

Fig. 41 is a flow chart of a fifth example of a display process of the used amount confirmation screen 1500. The flow chart corresponds to process sequence SD-3. Therefore, a processing entity in a right column is the energy management server 500.

The display process according to the fifth example differs from the display process according to the fourth example in that S4101, S4102, and S4103 are provided in place of S3801, S3802, S3901, S3902, and S3706, and S4111, S4112, S4113, S4114, and S4115 are provided in place of S3811 and S3813.

In S4101, the screen generating section 101 of the terminal 100 transmits a drawing data request to the energy management server 500.

In S4111, the energy management server 500 receives the drawing data request.

In S4112 following S3713 and S3812, the energy management server 500 transmits a request to acquire the calendar plan list 2600 to the calendar server 600 and, in S4113, the energy management server 500 receives the calendar plan list 2600.

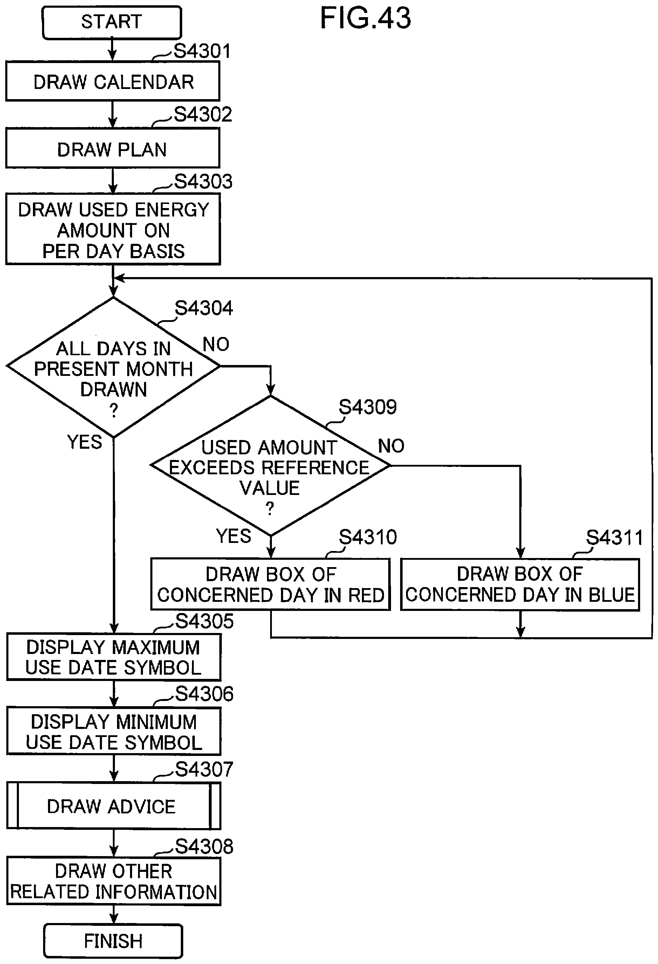

In S4114, the energy management server 500 creates drawing data. Details of the process of S4114 are the same as a display process of a used energy amount to be described later with reference to Figs. 43 to 48.

In S4115, the energy management server 500 transmits the drawing data to the terminal 100.

In S4102, the communicating section 107 of the terminal 100 receives the drawing data.

In S4103, the screen generating section 101 draws information regarding a used energy amount using the drawing data.

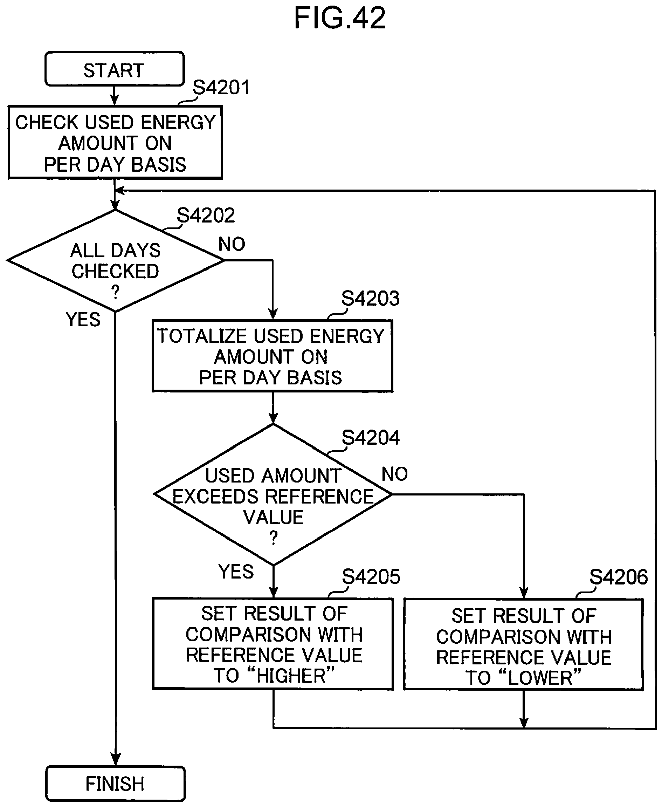

Alternatively, a mode may be adopted in which the energy measuring unit 200 includes an application drawing data generating section. In this case, the processing entity in the right column in Fig. 42 is the energy measuring unit 200.

Fig. 42 is a flow chart of a generation process (S3704, S3812) of the energy display data 2500.

A processing entity of an energy generation process is the energy display data generating section 105 of the terminal 100 or the energy display data generating section 504 of the energy management server 500.

First, using the energy data, a used energy amount is checked on a daily basis (S4201). Specifically, one day among days that are calculation objects of a used energy amount is extracted as a check object. In this case, as days that are calculation objects of a used energy amount, days from the next day of a day for which a used energy amount is already calculated to the previous day of the present day are adopted.

Next, if checks are completed on all days that are calculation objects (YES in S4202), the process is finished, and if checks are not completed (NO in S4202), the process proceeds to S4203.

Subsequently, using energy data of a day that is a check object, a used energy amount of each device 400 is totalized (S4203). Next, a determination is made on whether or not the totalized value or, in other words, a used energy amount of a day that is a check object exceeds the reference value (S4204).

If the energy amount of a day that is a check object exceeds the reference value (YES in S4204), "higher" is set to "comparison with reference value" of a record of a corresponding day in the energy display data 2500 (S4205). On the other hand, if the energy amount of a day that is a check object is equal to or lower than the reference value (NO in S4204), "lower" is set to "comparison with reference value" of a record of a corresponding day in the energy display data 2500 (S4206).

Once the process of S4205 or S4206 is completed, the process returns to S4202, the next day is determined as a check object, and processes of S4202 and thereafter are performed.

Fig. 43 is a flow chart of a first example of a display process (S3706) of a used energy amount by the terminal 100. First, the screen generating section 101 draws an initial image of the calendar data display field 1503 (S4301). In this case, the initial image of the calendar data display field 1503 includes basic information (for example, months, days, weeks, boxes, and the like) of a calendar.

Next, using the calendar plan list 2600, the screen generating section 101 draws schedule icons 1507 on days for which the user has made plans on the calendar data display field 1503 (S4302).

Subsequently, the screen generating section 101 uses the energy display data 2500 to draw a used energy amount of the present month on a daily basis (S4303).

Next, the screen generating section 101 determines one day to be a drawing object from the present month, and if drawing with respect to all days in the present month has not been completed (NO in S4304), the process is advanced to S4309. On the other hand, if drawing with respect to all days in the present month is completed (YES in S4304), the screen generating section 101 displays the maximum use date symbol 1506 in the box 1504 of the day whose used energy amount is largest in the present month (S4305).

Subsequently, the screen generating section 101 displays the minimum use date symbol 1505 in the box 1504 of the day whose used energy amount is lowest in the present month (S4306).

Next, the screen generating section 101 executes an advice drawing process (S4307). Details of this process will be described later.

Subsequently, the screen generating section 101 draws other related information on the used amount confirmation screen 1500 (S4308). In this case, other related information include screen parts for which the drawing described above has not been performed on the used amount confirmation screen 1500.

In S4309, the screen generating section 101 uses the energy display data 2500 to determine whether or not the used energy amount of the day that is a drawing object is higher than the reference value.

If the used energy amount of the day that is a drawing object is higher than the reference value (YES in S4309), the screen generating section 101 draws the box 1504 of the day that is a drawing object in red (first color) (S4310).

On the other hand, if the used energy amount of the day that is a drawing object is equal to or lower than the reference value (NO in S4309), the screen generating section 101 draws the box 1504 of the day that is a drawing object in blue (S4311). Accordingly, the used amount confirmation screens 1500 such as those shown in Figs. 15 to 17 are displayed.

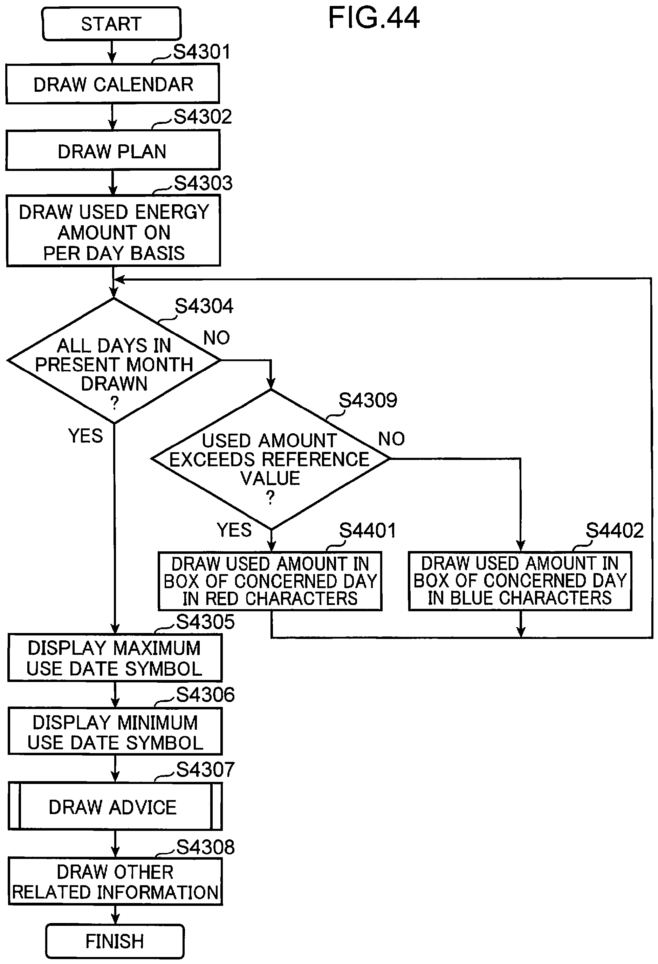

Once the process of S4310 or S4311 is completed, the process returns to S4304, the next day is determined as a drawing object, and processes of S4304 and thereafter are performed. Moreover, when a mode where information related to a used energy amount is displayed on a per week basis is adopted, the "present month" in S4304 changes to "present week". In addition, when Fig. 43 represents a subroutine of S4112 (a drawing data creation process), the used amount confirmation screen 1500 generated in S4308 is converted into the HTML format to be transmitted to and displayed by the terminal 100. This also applies to Figs. 44 to 48 to be described below.

Fig. 44 is a flow chart of a second example of the display process (S3706) of a used energy amount by the terminal 100. The display process of a used energy amount according to the second example differs from the display process of a used energy amount according to the first example in that S4401 and S4402 are provided in place of the processes of S4310 and S4311. Otherwise, the display process is the same as the display process of a used energy amount according to the first example.

In S4401, the screen generating section 101 draws a used energy amount using red (first color) characters in the box 1504 of the day that is a drawing object.

In S4402, the screen generating section 101 draws a used energy amount using blue (second color) characters in the box 1504 of the day that is a drawing object. In this case, on the used amount confirmation screen 1500 shown in Fig. 20, the characters of the used energy amount are displayed in red in the box 1504 when the used energy amount is higher than the reference value, and the characters of the used energy amount are displayed in blue in the box 1504 when the used energy amount is equal to or lower than the reference value.

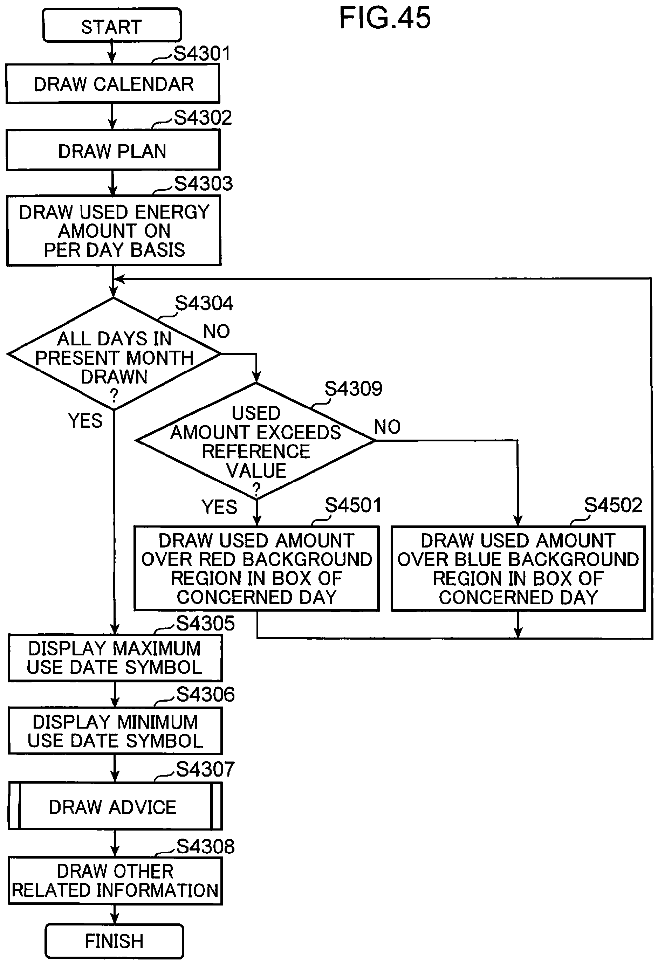

Fig. 45 is a flow chart of a third example of the display process (S3706) of a used energy amount by the terminal 100. The display process of a used energy amount according to the third example differs from the display process of a used energy amount according to the first example in that S4501 and S4502 are provided in place of the processes of S4310 and S4311. Otherwise, the display process is the same as the display process of a used energy amount according to the first example.

In S4501, the screen generating section 101 draws characters representing a used energy amount over a background region colored in red (first color) of the box 1504 of the day that is a drawing object.

In S4502, the screen generating section 101 draws characters representing a used energy amount over a background region colored in blue (second color) of the box 1504 of the day that is a drawing object. In this case, as shown in Fig. 19, the used energy amount is displayed highlighted in red in the box 1504 when the used energy amount is higher than the reference value, and the used energy amount is displayed highlighted in blue in the box 1504 when the used energy amount is equal to or lower than the reference value.

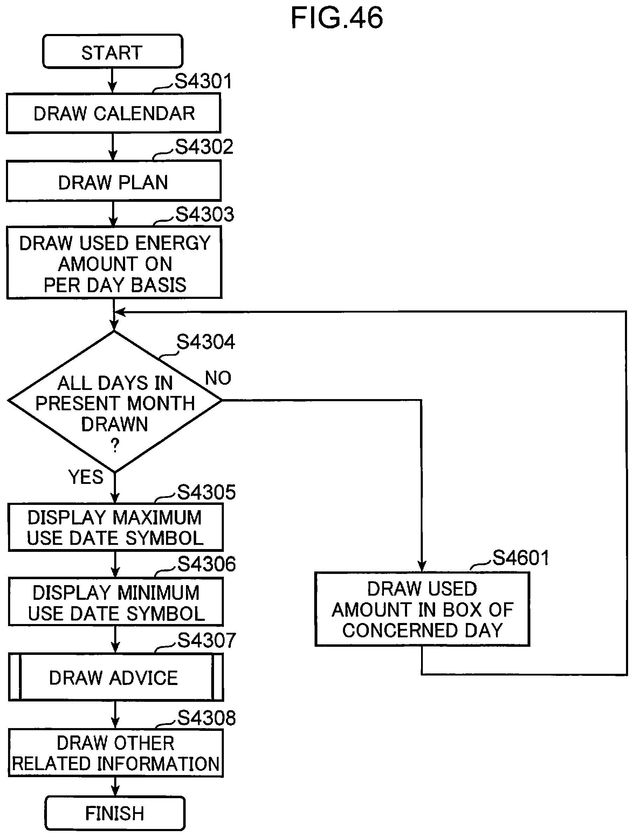

Fig. 46 is a flow chart of a fourth example of the display process (S3706) of a used energy amount by the terminal 100. The display process of a used energy amount according to the fourth example differs from the display process of a used energy amount according to the first example in that S4601 is provided in place of the processes of S4309, S4310, and S4311. Otherwise, the display process is the same as the display process of a used energy amount according to the first example.

In S4601, the screen generating section 101 draws characters representing a used energy amount in the box 1504 of the day that is a drawing object. In this case, the characters representing the used energy amount is displayed in a same color on the used amount confirmation screen 1500 shown in Fig. 20 regardless of whether or not the used energy amount is higher than the reference value.

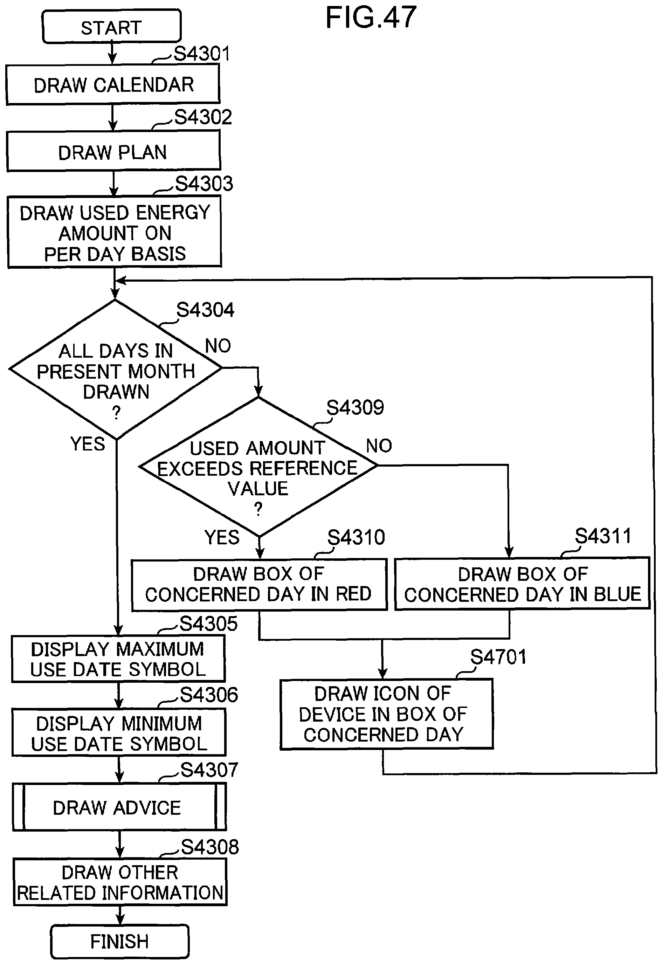

Fig. 47 is a flow chart of a fifth example of the display process (S3706) of a used energy amount by the terminal 100. The display process of a used energy amount according to the fifth example differs from the display process of a used energy amount according to the first example in that S4701 is provided after the processes of S4310 and S4311. Otherwise, the display process is the same as the display process of a used energy amount according to the first example.

In S4701, using the energy display data 2500, the screen generating section 101 draws the device icon 1512 of the device 400 whose used energy amount is largest on a day that is a drawing object in the box 1504 of the day (S4701). In this case, as shown in Fig. 21, the used amount confirmation screen 1500 is displayed on which the device icon 1512 of the device 400 whose used energy amount is largest is drawn in each box 1504 preceding the previous day.

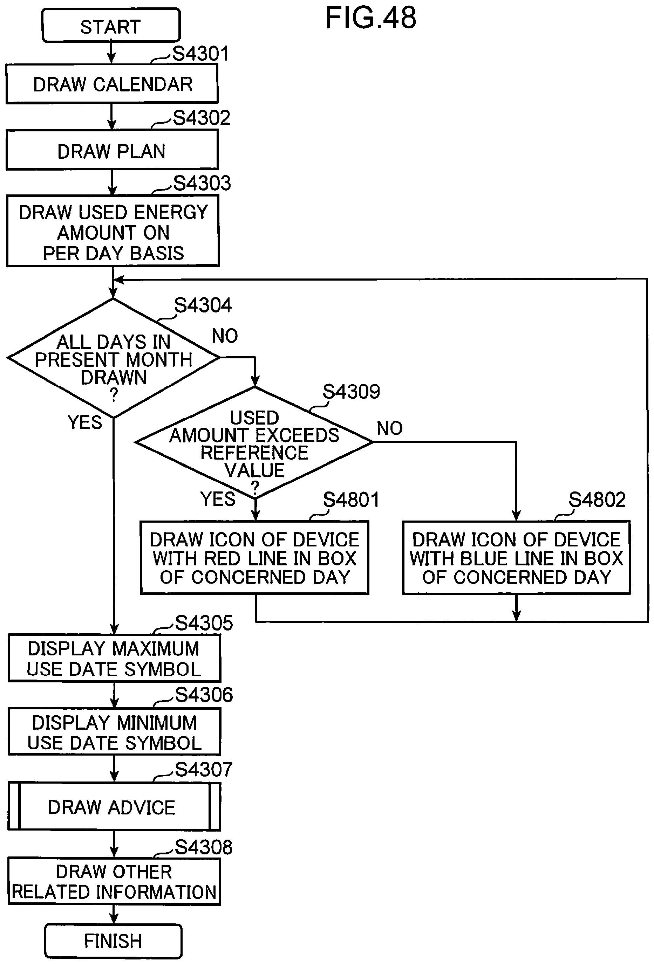

Fig. 48 is a flow chart of a sixth example of the display process (S3706) of a used energy amount. The display process of a used energy amount according to the sixth example differs from the display process of a used energy amount according to the first example in that S4801 and S4802 are provided in place of the processes of S4310 and S4311. Otherwise, the display process is the same as the display process of a used energy amount according to the first example.

In S4801, using the energy display data 2500, the screen generating section 101 draws the device icon 1512 of the device 400 whose used energy amount is largest on a day on which the used energy amount is higher than the reference value with a red (first color) line in the box 1504 of the day.

In S4802, using the energy display data 2500, the screen generating section 101 draws the device icon 1512 of the device 400 whose used energy amount is largest on a day on which the used energy amount is equal to or lower than the reference value with a blue (second color) line in the box 1504 of the day. In this case, as shown in Fig. 22, the used amount confirmation screen 1500 is displayed on which is drawn the device icon 1512 having a drawing line depicting a contour or the like of an image indicating the device 400 colored in the first color or the second color and a background of the image indicating the device 400 colored in the first color or the second color.

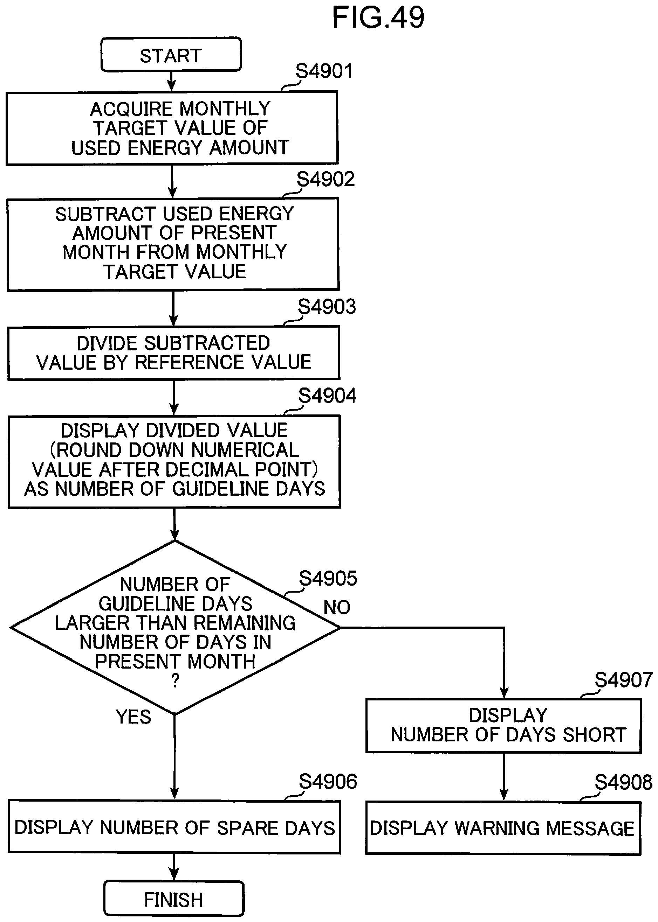

Fig. 49 is a flow chart showing an advice drawing process (S4307).

First, the screen generating section 101 acquires a monthly target value of a used energy amount using the reference value table 2300 (S4901). In this case, the screen generating section 101 may acquire the monthly target value from the storing section 104 if the reference value table 2300 is stored in the storing section 104. Meanwhile, if the reference value table 2300 is not stored in the storing section 104, the reference value table 2300 may be acquired from a device that stores the reference value table 2300.

Next, the screen generating section 101 subtracts a used energy amount of the present month from the monthly target value (S4902). Specifically, if the present day is the "10th" of the present month, the screen generating section 101 obtains a total value of the respective used energy amounts of the 1 st to the 9th and subtracts the total value from the monthly target value.

Subsequently, the screen generating section 101 divides the subtracted value obtained in S4902 by the reference value (S4903). Next, the screen generating section 101 displays the divided value obtained in S4903 as the number of guideline days in the number of guideline days 1508 of the advice display field 1511 (S4904). In this case, if the divided value includes a numerical value after the decimal point, the screen generating section 101 may calculate a value obtained by rounding down the numerical value after the decimal point as the number of guideline days. Since the greater the subtracted value, the greater the margin in the used energy amount with respect to the monthly target value, the number of guideline days indicates a guideline for a degree of margin in the used energy amount with respect to the monthly target value.

Next, if the number of guideline days is larger than the remaining number of days in the present month (YES in S4905), the screen generating section 101 calculates a value obtained by subtracting the remaining number of days from the number of guideline days as the number of spare days and displays the number of spare days in the number of spare days 1509 of the advice display field 1511 (S4906).

On the other hand, if the number of guideline days is equal to or smaller than the remaining number of days in the present month (NO in S4905), the screen generating section 101 calculates a value obtained by subtracting the number of guideline days from the remaining number of days as the number of days short and displays the number of days short in the number of days short 1510 of the advice display field 1511 (S4907).

Subsequently, the screen generating section 101 displays a warning message in the advice display field 1511 (S4908). In this case, the text described in the advice display field 1511 shown in Fig. 18 may be adopted as the warning message or a text other than that shown in Fig. 18 such as "At this rate, you will not achieve the monthly target value" may be adopted as the warning message.

Moreover, while both a display indicating a day on which the used energy amount had exceeded the reference value and a display indicating a day on which the used energy amount had been equal to or lower than the reference value are displayed in the description given above, only one of the displays may be displayed instead.

In addition, in the description given above, when determining whether or not a used energy amount has exceeded the reference value, the used energy amount is determined to be "high" on days where the used energy amount exceeds the reference value and the used energy amount is determined to be "low" on days where the used energy amount is equal to or lower than the reference value. However, this determination is not restrictive. Alternatively, a determination that the used energy amount is "high" may be made when the used energy amount is equal to or higher than the reference value and a determination that the used energy amount is "low" may be made when the used energy amount is lower than the reference value.

### Industrial Applicability

The present disclosure is useful in a cloud system that manages plans of a user or manages reservable days of a service person.

## Claims

1. A method for controlling a communication device which includes a display and which is connected via a network to an information management system that collects and manages log information including a consumed power amount of an electric appliance,
the communication device including a memory that manages schedule information of a user of the communication device,
the method causing a computer of the communication device to:
receive an instruction to display on the display calendar data representing each day on a per month or per week basis;
receive information indicating a consumed power amount associated with the user from the information management system via the network;
generate calendar data combining a first display indicating that the consumed power amount associated with the user exceeds a prescribed reference value and a second display indicating that the consumed power amount associated with the user is equal to or lower than the prescribed reference value, in each region corresponding to each day before a present day of a concerned month or a concerned week based on the managed schedule information and the received information indicating the consumed power amount; and
display the calendar data on the display.

2. The method according to claim 1, wherein
a plan of the user is registrable to the communication device in each region corresponding to each day displayed in the calendar data.

3. The method according to claim 1 or 2, wherein
when the present day of the concerned month or the concerned week shifts to the following day, the first display or the second display is displayed in accordance with a consumed power amount of the present day of the concerned month or the concerned week in a region corresponding to the present day before the shift to the following day.

4. The method according to any one of claims 1 to 3, wherein
the first display includes a display using a first color and the second display includes a display using a second color that differs from the first color.

5. The method according to any one of claims 1 to 4, further causing the computer of the communication device to:
calculate the number of guideline days which indicates how many days in the concerned month or the concerned week after the present day must have a consumed power amount that is equal to or below the prescribed reference value in order to make an average consumed power amount of the concerned month or the concerned week to be equal to or lower than a target value of the average consumed power amount of the concerned month or the concerned week; and
display first advice information indicating whether the number of the guideline days is higher or lower than the remaining number of days of the concerned month or the concerned week.

6. The method according to any one of claims 1 to 4, further causing the computer of the communication device to:
calculate the number of guideline days which indicates how many days in the concerned month or the concerned week after the present day must have a consumed power amount that is equal to or below the prescribed reference value in order to make a total consumed power amount of the concerned month or the concerned week to be equal to or lower than a target value of the total consumed power amount of the concerned month or the concerned week; and
display second advice information indicating whether the number of the guideline days is higher or lower than the remaining number of days of the concerned month or the concerned week.

7. The method according to claim 5, wherein
when the present day of the concerned month or the concerned week shifts to the following day, the first advice information is updated to include the consumed power amount of the present day before the shift.

8. The method according to claim 6, wherein
when the present day of the concerned month or the concerned week shifts to the following day, the second advice information is updated to include the consumed power amount of the present day before the shift.

9. The method according to any one of claims 1 to 8, further causing the computer of the communication device to:
display, based on the received information indicating the consumed power amount, first display data indicating that any day before the present day of the concerned month or the concerned week includes a day with a lowest consumed power amount, in a region which is displayed in the calendar data and which corresponds to the day.

10. The method according to any one of claims 1 to 9, further causing the computer of the communication device to:
display, based on the received information indicating the consumed power amount, second display data indicating that any day before the present day of the concerned month or the concerned week includes a day with a highest consumed power amount, in a region which is displayed in the calendar data and which corresponds to the day.

11. The method according to any one of claims 1 to 10, further causing the computer of the communication device to:
display a device display representing an electric appliance with a highest consumed power amount, in a corresponding region among each day before the present day of the concerned month or the concerned week.

12. A program to be executed by a communication device which includes a display and which is connected via a network to an information management system that collects and manages log information of an electric appliance,
the communication device including a memory that manages schedule information of a user of the communication device,
the program causing a computer of the communication device to:
receive an instruction to display on the display calendar data representing each day on a per month or per week basis;
receive information indicating a consumed power amount associated with the user from the information management system via the network;
generate calendar data combining a first display indicating that the consumed power amount associated with the user exceeds a prescribed reference value and a second display indicating that the consumed power amount associated with the user is equal to or lower than the prescribed reference value, in each region corresponding to each day before a present day of a concerned month or a concerned week based on the managed schedule information and the received information indicating the consumed power amount; and
display the calendar data on the display.

13. A communication device, comprising a memory that manages schedule information of user, the communication device being mounted with the program according to claim 12.

14. A method for controlling a communication device which includes a display and which is connected via a network to an information management system that collects and manages log information including a consumed power amount of an electric appliance,
the method causing a computer of the communication device to:
receive an instruction to display on the display calendar data representing each day on a per month or per week basis;
receive schedule information of a user of the communication device from the information management system via the network in response to the instruction;
receive information indicating a consumed power amount associated with the user from the information management system via the network;
generate calendar data combining a first display indicating that the consumed power amount associated with the user exceeds a prescribed reference value and a second display indicating that the consumed power amount associated with the user is equal to or lower than the prescribed reference value, in each region corresponding to each day before a present day of a concerned month or a concerned week based on the received schedule information and the received information indicating the consumed power amount; and
display the calendar data on the display.

15. The method according to claim 14, wherein
a plan of the user is registrable to the communication device in each region corresponding to each day displayed in the calendar data.

16. The method according to claim 14 or 15, wherein
when the present day of the concerned month or the concerned week shifts to the following day, the first display or the second display is displayed in accordance with a consumed power amount of the present day of the concerned month or the concerned week in a region corresponding to the present day before the shift to the following day.

17. The method according to any one of claims 14 to 16, wherein
the first display includes a display using a first color and the second display includes a display using a second color that differs from the first color.

18. A program to be executed by a communication device which includes a display and which is connected via a network to an information management system that collects and manages log information of an electric appliance,
the program causing a computer of the communication device to:
receive an instruction to display on the display calendar data representing each day on a per month or per week basis;
receive schedule information of a user of the communication device from the information management system via the network in response to the instruction;
receive information indicating a consumed power amount associated with the user from the information management system via the network;
generate calendar data combining a first display indicating that the consumed power amount associated with the user exceeds a prescribed reference value and a second display indicating that the consumed power amount associated with the user is equal to or lower than the prescribed reference value, in each region corresponding to each day before a present day of a concerned month or a concerned week based on the received schedule information and the received information indicating the consumed power amount; and
display the calendar data on the display.

19. A communication device mounted with the program according to claim 18.

20. An method for providing information in an information management system that collects and manages log information including a consumed power amount of an electric appliance via a network, the information method comprising:
receiving a request to display, on a display, calendar data representing schedule information of a user associated with the electric appliance for each day on a per month or per week basis, from a communication device of the user via the network;
inputting the schedule information of the user from a memory that manages the schedule information of the user to generate the calendar data in response to the request;
generating, based on information indicating a consumed power amount associated with the user, calendar data combining a first display indicating that the consumed power amount associated with the user exceeds a prescribed reference value and a second display indicating that the consumed power amount associated with the user is equal to or lower than the prescribed reference value, in each region corresponding to each day before a present day of a concerned month or a concerned week; and
transmitting the calendar data to the communication device via the network to be displayed on the display of the communication device.

21. A method for controlling a communication device which includes a display and which is connected via a network to an information management system that collects and manages log information including a consumed power amount of an electric appliance,
the communication device including a memory that manages schedule information of a user of the communication device,
the method causing a computer of the communication device to:
receive an instruction to display on the display calendar data representing each day on a per month or per week basis;
receive information indicating a consumed power amount associated with the user from the information management system via the network;
generate, based on the managed schedule information and the received information indicating the consumed power amount, calendar data combining each numeral representing a consumed power amount associated with the user in each region corresponding to each day before a present day of a concerned month or a concerned week; and
display on the display the calendar data combining each numeral representing the consumed power amount associated with the user.

22. A method for controlling a communication device which includes a display and which is connected via a network to an information management system that collects and manages log information including a consumed power amount of an electric appliance,
the method causing a computer of the communication device to:
receive an instruction to display on the display calendar data representing each day on a per month or per week basis;
receive schedule information of a user of the communication device from the information management system via the network in response to the instruction;
receive information indicating a consumed power amount associated with the user from the information management system via the network; and
generate, based on the received schedule information and the received information indicating the consumed power amount, calendar data combining each numeral representing a consumed power amount associated with the user in each region corresponding to each day before a present day of a concerned month or a concerned week; and
display on the display the calendar data combining the each numeral representing the consumed power amount associated with the user.

23. A method for providing information in an information management system that collects and manages log information including a consumed power amount of an electric appliance via a network, the information method comprising:
receiving a request to display, on a display, calendar data representing schedule information of a user associated with the electric appliance for each day on a per month or per week basis, from a communication device of the user via the network;
inputting the schedule information of the user from a memory that manages the schedule information of the user to generate the calendar data in response to the request;
generating, based on information indicating a consumed power amount associated with the user, calendar data combining each numeral representing the consumed power amount associated with the user in each region corresponding to each day before a present day of a concerned month or a concerned week; and
transmitting the calendar data to the communication device via the network to be displayed on the display of the communication device.
